# EUROPEAN PATENT APPLICATION

(11) **EP 4 672 843 A1**
(43) Date of publication of application: **31.12.2025**
(21) Application number: 23926676.0
(22) Date of filing: 10.03.2023
(51) Int. Cl.: H04W 72/53, G06F 9/50

(54) **METHOD FOR SENDING STATE INFORMATION, AND COMMUNICATION APPARATUS**

(71) Applicant: Huawei Technologies Co., Ltd., Shenzhen, Guangdong 518129 (CN)
(72) Inventor: SHEN, Haihua, Shenzhen, Guangdong 518129 (CN); LIANG, Wenliang, Shenzhen, Guangdong 518129 (CN); WANG, Enbo, Shenzhen, Guangdong 518129 (CN); LI, Fangfang, Shenzhen, Guangdong 518129 (CN); LIN, Hao, Shenzhen, Guangdong 518129 (CN)
(74) Representative: Goddar, Heinz J.
(86) International application number: PCT/CN2023/080874
(87) International publication number: WO 2024/187317

(57) **Abstract**

This application relates to the field of communication technologies, and provides a state information sending method and a communication apparatus. The method includes: A first device receives first indication information from a second device, where the first indication information indicates the first device to create at least one execution unit; the first device creates a first execution unit based on the first indication information; and the first device sends first state information to the second device, where the first state information indicates a current state of the first execution unit. The method can improve resource utilization.

## Description

### TECHNICAL FIELD

This application relates to the field of communication technologies, and in particular, to a state information sending method and a communication apparatus.

### BACKGROUND

With the rapid development of wireless communication technologies, more applications are intelligent. Service models implemented based on an artificial intelligence (Artificial Intelligence, AI) technology are diversified and complex. Currently, some AI services are mainly implemented in a cloud and a cloud/edge environment. For example, in the cloud/edge environment, a plurality of computing power nodes (such as a cloud-side computing power node and an edge-side computing power node) with specific computing power resources are deployed, and execution units are deployed on these computing power nodes to process complex and diversified AI services. However, when the execution units on these computing power nodes often exhibit low resource utilization when processing the AI services.

Therefore, how to improve the resource utilization is a problem that needs to be urgently resolved currently.

### SUMMARY

This application provides a state information sending method and a communication apparatus, to improve resource utilization.

According to a first aspect, a state information sending method is provided. The method includes: A first device receives first indication information from a second device, where the first indication information indicates the first device to create at least one execution unit; the first device creates a first execution unit based on the first indication information; and the first device sends first state information to the second device, where the first state information indicates a current state of the first execution unit.

In the foregoing solution, the first device creates the first execution unit based on the first indication information and reports the state (that is, the first state information) of the first execution unit to the second device in time, so that the second device adjusts a scheduling strategy in time, to improve scheduling performance, ensure service continuity, and improve resource utilization. For example, in some cases, the first execution unit is not executing a task, but is always in a running state, and occupies a large quantity of computing power resources. If the first device reports the state of the first execution unit to the second device in time, the second device may process the first execution unit immediately, for example, delete the first execution unit or switch the first execution unit to an idle state, to release an idle computing power resource for processing another service, thereby ensuring service continuity and improving resource utilization.

Optionally, before the first device creates the first execution unit based on the first indication information, the method further includes: When a free resource of the first device does not meet a resource requirement of the first execution unit, the first device switches a second execution unit from a running state to an idle state, where a resource occupied by the second execution unit in the idle state is less than a resource occupied by the second execution unit in the running state; and that the first device creates the first execution unit based on the first indication information includes: The first device creates the first execution unit based on the first indication information by using a released resource and the free resource, where the released resource includes a resource released after the second execution unit is switched from the running state to the idle state.

In this embodiment, the first device creates an execution unit with a priority based on an indication of the second device, so that the second device determines, based on priorities of execution units, which execution units (for example, the second execution unit) can be switched from the running state to the idle state, to release a part of computing power resources for creating another new execution unit (for example, the first execution unit), instead of directly deleting the execution units. In this way, a computing resource of an execution unit with a low priority is used for an execution unit with a high priority based on the priorities of the execution units, so that resource utilization can be improved, and user experience can be enhanced.

Optionally, a priority of the second execution unit is lower than a priority of the first execution unit.

In this embodiment, the second device requires the first device to deploy an execution unit with a priority, so that the second device determines, based on the priorities of the execution units, which execution units can be switched from the running state to the idle state, to release a part of computing power resources for another service requirement. Certainly, the second device may alternatively determine, based on the priorities of the execution units, which execution units are switched from the idle state to the running state. This manner can improve the resource utilization and ensure real-time performance of a service.

Optionally, that the first device sends the first state information to the second device includes: The first device sends the first state information to the second device based on first configuration information, where the first configuration information is used for configuring a reporting moment of the at least one execution unit.

Compared with a real-time reporting manner, the first device reports the first state information based on the first configuration information, so that it can be ensured that the second device learns of the state of the first execution unit in time, and a waste of communication resources caused by frequent reporting can be avoided.

Optionally, before the first device sends the first state information to the second device, the method further includes: The first device receives query information from the second device, where the query information is used for querying the state of the first execution unit; and that the first device sends the first state information to the second device includes: The first device sends the first state information to the second device based on the query information.

The second device requires, in a query manner, the first execution unit to report the first state information, to determine, in time, whether creation of the first execution unit is normal. If the creation of the first execution unit is abnormal, the second device may notify, in time, the first device to delete the first execution unit, to ensure that the first device retrieves, in time, a computing resource occupied by the first execution unit, so that another execution unit on the first device uses the computing resource, or a new execution unit is created, thereby improving resource utilization.

Optionally, when the first state information indicates that the first execution unit is currently in a failed state, the method further includes: The first device deletes or recreates the first execution unit.

When the first execution unit is in the failed state, the first device deletes or recreates the first execution unit, to avoid a resource waste caused by the first execution unit in the failed state occupying a computing power resource for a long period of time when the first execution unit in the failed state cannot process a service.

Optionally, before the first device deletes or recreates the first execution unit, the method further includes: The first device receives second indication information from the second device, where the second indication information indicates the first device to delete or recreate the first execution unit; and that the first device deletes or recreates the first execution unit includes: The first device deletes or recreates the first execution unit based on the second indication information.

The first device processes the first execution unit in the failed state in time based on the second indication information, to prevent the first execution unit in the failed state from affecting performance of another collaborative computing power node, thereby ensuring the service continuity.

Optionally, the method further includes: The first device sends second state information to the second device, where the second state information indicates a task state of the first execution unit.

The first device sends the second state information to the second device, so that the second device can learn of the task state of the first execution unit in time. In this way, the second device determines a processing decision (for example, deleting or recreating the first execution unit) in time, thereby ensuring the service continuity and improving service undergo of a user.

Optionally, the method further includes: When the first execution unit is recreated, and the task state of the first execution unit indicates that a task is uncompleted, the first device receives second configuration information from the second device, where the second configuration information is used for configuring a task matching the first execution unit.

In a case in which the first execution unit does not complete a task, after being recreated, the first execution unit may re-execute, based on the second configuration information, a service matching the first execution unit, to ensure service processing continuity.

Optionally, when the first execution unit is not deleted, the method further includes: The first device receives third indication information from the second device, where the third indication information indicates whether to switch the state of the first execution unit, states of the first execution unit include the running state and the idle state, and a resource occupied by the first execution unit in the running state is greater than a resource occupied by the first execution unit in the idle state; and the first device determines the state of the first execution unit based on the third indication information.

The second device indicates, by using the third indication information, the first device to switch the state of the first execution unit, for example, from the running state to the idle state. This can avoid a case in which the first execution unit occupies a resource for a long period of time when the first execution unit cannot process a task. In addition, when the first device can execute a task, the second device may conveniently switch the first execution unit from the idle state to the running state without recreating a new execution unit, to reduce a process of deleting or recreating the execution unit. In this way, real-time performance of service processing and user experience are improved.

Optionally, before the first device receives the third indication information from the second device, the method further includes: The first device sends a switching request to the second device, where the switching request is used for requesting to switch the state of the first execution unit.

When determining that the first execution unit is not suitable for or is suitable for computing power collaboration, the first device sends the switching request to the second device, so that the second device adjusts a task delivery strategy based on the switching request.

Optionally, before the first device receives the third indication information from the second device, the method further includes: The first device sends, to the second device, third state information that indicates a state of a radio channel between the first device and the second device, where the third state information is used by the second device to send the third indication information, and the third state information and the first state information are sent by using same signaling.

The first device sends the third state information to the second device, to notify the second device whether a current environment is suitable for the first execution unit to participate in computing power collaboration. First, a case in which the second device continues to deliver a processing task to the first execution unit when quality of the channel is poor but the first execution unit cannot process the processing task in time can be avoided. Second, a case in which after the quality of the channel is recovered, the first execution unit occupies a large quantity of computing power resources when there is no task to be processed because the second device cannot learn of a current state of the channel and does not deliver a task to the first execution unit can be avoided. Third, the third state information and the first state information are sent by using the same signaling, so that signaling overheads can be reduced.

Optionally, when the third indication information indicates to switch the state of the first execution unit from the running state to the idle state, the method further includes: The first device receives fourth indication information from the second device, where the fourth indication information indicates the first device to switch the state of the first execution unit from the idle state to the running state; and the first device determines the state of the first execution unit based on the fourth indication information.

In a case in which a task arrives, a state of a channel meets a requirement, or the like, the second device does not need to recreate a new execution unit, but quickly switches the first execution unit from the idle state to the running state again, so that a process of deleting or recreating the execution unit is reduced, and real-time performance of service processing and user experience are improved.

Optionally, the method further includes: When a communication parameter between the first device and the second device does not meet a preset requirement, the first device receives fifth indication information from the second device, where the fifth indication information indicates to delete the first execution unit; and the first device deletes the first execution unit based on the fifth indication information.

If the communication parameter between the first device and the second device does not meet the preset requirement, the second device may indicate, by using the fifth indication information, the first device to delete the first execution unit, to release a part of computing power resources for processing another service, so that resource utilization is improved.

According to a second aspect, this application provides a state information receiving method. The method includes: A second device sends first indication information to a first device, where the first indication information indicates the first device to create at least one execution unit; and the second device receives first state information from the first device, where the first state information indicates a current state of the first execution unit.

In the foregoing solution, the second device indicates, by using the first indication information, the first device to create the first execution unit, and adjusts a scheduling strategy in time based on the first state information reported by the first device, to improve scheduling performance, ensure service continuity, and improve resource utilization. For example, in some cases, the first execution unit is not executing a task, but is always in a running state, and occupies a large quantity of computing power resources. If the first device reports the state of the first execution unit to the second device in time, the second device may process the first execution unit immediately, for example, delete the first execution unit or switch the first execution unit to an idle state, to release an idle computing power resource for processing another service, thereby ensuring service continuity and improving resource utilization.

Optionally, receiving the first state information from the first device includes: The second device receives the first state information from the first device based on first configuration information, where the first configuration information is used for configuring a reporting moment of the at least one execution unit.

Compared with a real-time receiving manner, the second device receives the first state information based on the first configuration information, so that it can be ensured that the state of the first execution unit can be learned in time, and a waste of communication resources caused by frequent receiving can be avoided.

Optionally, before the first state information from the first device is received, the method further includes: The second device sends query information to the first device, where the query information is used for querying the state of the first execution unit.

The second device requires, in a query manner, the first execution unit to report the first state information, to determine, in time, whether creation of the first execution unit is normal. If the creation of the first execution unit is abnormal, the second device may notify, in time, the first device to delete the first execution unit, to ensure that the first device retrieves, in time, a computing resource occupied by the first execution unit, so that another execution unit uses the computing resource, or a new execution unit is created, thereby improving resource utilization.

Optionally, when the first state information indicates that the first execution unit is currently in a failed state, the method further includes: The second device sends second indication information to the first device, where the second indication information indicates the first device to delete or recreate the first execution unit.

The first device processes the first execution unit in the failed state in time based on the second indication information, to prevent the first execution unit in the failed state from affecting performance of another collaborative computing power node, thereby ensuring the service continuity.

Optionally, the method further includes: The second device receives second state information from the first device, where the second state information indicates a task state of the first execution unit.

The first device sends the second state information to the second device, so that the second device can learn of the task state of the first execution unit in time. In this way, the second device determines a processing decision (for example, deleting or recreating the first execution unit) in time, thereby ensuring the service continuity and improving service undergo of a user.

Optionally, the method further includes: When the first execution unit is recreated, and the task state of the first execution unit indicates that a task is uncompleted, the second device sends second configuration information to the second device, where the second configuration information is used for configuring a task matching the first execution unit.

In a case in which the first execution unit does not complete a task, after being recreated, the first execution unit may re-execute, based on the second configuration information, a service matching the first execution unit, to ensure service processing continuity.

Optionally, when the first execution unit is not deleted, the method further includes: The second device sends third indication information to the first device, where the third indication information indicates whether to switch the state of the first execution unit, states of the first execution unit include a running state and an idle state, and a resource occupied by the first execution unit in the running state is greater than a resource occupied by the first execution unit in the idle state.

The second device indicates, by using the third indication information, the first device to switch the state of the first execution unit, for example, from the running state to the idle state. This can avoid a case in which the first execution unit occupies a resource for a long period of time when the first execution unit cannot process a task. In addition, when the first device can execute a task, the second device may conveniently switch the first execution unit from the idle state to the running state without recreating a new execution unit, to reduce a process of deleting or recreating the execution unit. In this way, real-time performance of service processing and user experience are improved.

Optionally, before the second device sends the third indication information to the first device, the method further includes: The second device receives a switching request from the first device, where the switching request is used for requesting to switch the state of the first execution unit.

When determining that the first execution unit is not suitable for or is suitable for computing power collaboration, the first device sends the switching request to the second device, so that the second device adjusts a task delivery strategy based on the switching request.

Optionally, before the second device sends the third indication information to the first device, the method further includes: The second device receives third state information that is from the first device and that indicates a state of a radio channel between the first device and the second device, where the third state information is used by the second device to send the third indication information, and the third state information and the first state information are sent by using same signaling.

The first device sends the third state information to the second device, to notify the second device whether a current environment is suitable for the first execution unit to participate in computing power collaboration. First, a case in which the second device continues to deliver a processing task to the first execution unit when quality of the channel is poor but the first execution unit cannot process the processing task in time can be avoided. Second, a case in which after the quality of the channel is recovered, the first execution unit occupies a large quantity of computing power resources when there is no task to be processed because the second device cannot learn of a current state of the channel and does not deliver a task to the first execution unit can be avoided. Third, the third state information and the first state information are sent by using the same signaling, so that signaling overheads can be reduced.

Optionally, when the third indication information indicates to switch the state of the first execution unit from the running state to the idle state, the method further includes: The second device sends fourth indication information to the first device, where the fourth indication information indicates the first device to switch the state of the first execution unit from the idle state to the running state.

In a case in which a task arrives, a state of a channel meets a requirement, or the like, the second device does not need to recreate a new execution unit, but quickly switches the first execution unit from the idle state to the running state again, so that a process of deleting or recreating the execution unit is reduced, and real-time performance of service processing and user experience are improved.

Optionally, the method further includes: When a communication parameter between the first device and the second device does not meet a preset requirement, the second device sends fifth indication information to the first device, where the fifth indication information indicates to delete the first execution unit.

If the communication parameter between the first device and the second device does not meet the preset requirement, the second device may indicate, by using the fifth indication information, the first device to delete the first execution unit, to release a part of computing power resources for processing another service, so that resource utilization is improved.

According to a third aspect, a communication apparatus is provided. For beneficial effects, refer to the descriptions in the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function. In a possible design, the communication apparatus includes: a first receiving module, configured to receive first indication information from a second device, where the first indication information indicates the first device to create at least one execution unit; a first processing module, configured to create a first execution unit based on the first indication information; and a first sending module, configured to send first state information to the second device, where the first state information indicates a current state of the first execution unit. These modules may perform corresponding functions in the method example in the first aspect. For details, refer to the detailed descriptions in the method example. Details are not described herein again.

According to a fourth aspect, a communication apparatus is provided. For beneficial effects, refer to the descriptions in the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function. The communication apparatus includes: a second sending module, configured to send first indication information to a first device, where the first indication information indicates the first device to create at least one execution unit; and a second receiving module, configured to receive first state information from the first device, where the first state information indicates a current state of the first execution unit. These modules may perform corresponding functions in the method example in the second aspect. For details, refer to the detailed descriptions in the method example. Details are not described herein again.

According to a fifth aspect, a communication apparatus is provided. The communication apparatus may be a terminal device in the foregoing method embodiments or a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a sixth aspect, a communication apparatus is provided. The communication apparatus may be a network device in the foregoing method embodiments or a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a seventh aspect, a computer program product is provided. The computer program product includes computer program code. When the computer program code is run, the method performed by the terminal device in the foregoing aspects is performed.

According to an eighth aspect, a computer program product is provided. The computer program product includes computer program code. When the computer program code is run, the method performed by the network device in the foregoing aspects is performed.

According to a ninth aspect, this application provides a chip system. The chip system includes a processor, configured to implement functions of the terminal device in the method of the foregoing aspects. In a possible design, the chip system further includes a memory, configured to store program instructions and/or data. The chip system may include a chip, or may include a chip and another discrete component.

According to a tenth aspect, this application provides a chip system. The chip system includes a processor, configured to implement functions of the network device in the method of the foregoing aspects. In a possible design, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program. When the computer program is run, the method performed by the terminal device in the foregoing aspects is implemented.

According to a twelfth aspect, this application provides a computer-readable storage medium. The computer-readable storage medium stores a computer program. When the computer program is run, the method performed by the network device in the foregoing aspects is implemented.

### BRIEF DESCRIPTION OF DRAWINGS

FIG. 1 is a diagram of a structure of a wireless communication system 100 according to an embodiment of this application;
FIG. 2 is a diagram of a cloud-edge collaboration scenario according to an embodiment of this application;
FIG. 3 is a diagram of a network-terminal collaboration scenario according to an embodiment of this application;
FIG. 4 is a diagram of an interaction procedure of sending state information according to an embodiment of this application;
FIG. 5 is a diagram of states of an execution unit in an entire life cycle according to an embodiment of this application;
FIG. 6 is another diagram of states of an execution unit in an entire life cycle according to an embodiment of this application;
FIG. 7 is a diagram of busy and free states of resources of an execution unit at different moments according to an embodiment of this application;
FIG. 8 is a schematic flowchart of information exchange between a terminal device and a network device according to an embodiment of this application;
FIG. 9 is another schematic flowchart of information exchange between a terminal device and a network device according to an embodiment of this application;
FIG. 10 is a diagram of computing power resource allocation of a terminal device according to an embodiment of this application;
FIG. 11 is another schematic flowchart of information exchange between a terminal device and a network device according to an embodiment of this application;
FIG. 12 is a diagram of state switching of a first execution unit according to an embodiment of this application;
FIG. 13 is a schematic flowchart of information exchange between a terminal device and a network device in a mobility scenario according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of still another communication apparatus according to an embodiment of this application.

### DESCRIPTION OF EMBODIMENTS

The following describes the technical solutions in embodiments of this application with reference to the accompanying drawings in embodiments of this application.

In descriptions of this application, "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be understood that in this application, descriptions similar to "in a case of...", "if...", "when...", "it is assumed that...", and the like may be used interchangeably.

The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio (new radio, NR) access technology. The technical solutions provided in this application may be further applied to a future communication system such as a 6th generation (6th generation, 6G) mobile communication system.

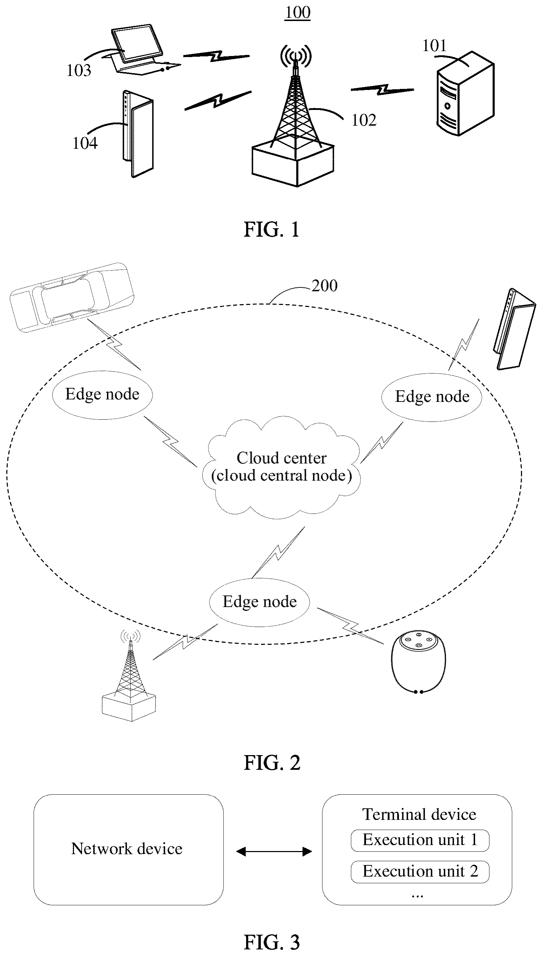

FIG. 1 is a diagram of a communication system 100 to which an embodiment of this application is applicable. As shown in FIG. 1, the communication system 100 may include a core network device 101, an access network device 102, and at least one terminal device (for example, a terminal device 103 and a terminal device 104 shown in FIG. 1). The terminal device 103 and the terminal device 104 may be connected to the access network device 102 in a wireless manner, and the access network device 102 is connected to the core network device 101 in a wireless or wired manner. It should be understood that the core network device and the access network device may be different physical devices that are independent of each other, functions of the core network device and logical functions of the access network device may be integrated into a same physical device, or some functions of the core network device and some functions of the access network device may be integrated into one physical device. It should be further understood that FIG. 1 is merely a diagram. The communication system may further include another network device, for example, may further include a wireless relay device and a wireless backhaul device. This is not limited in this application. It may be understood that a network in this embodiment of this application may be the core network device 101 or may be the access network device 102. A terminal in this embodiment of this application may be the terminal device 103 and/or the terminal device 104.

In this embodiment of this application, the access network device (for example, the access network device 102) is an access device for the terminal device to access the communication system in a wireless manner. The access network device may also be referred to as a radio access network (radio access network, RAN) device or a network device. For example, the access network device may be a base station. The base station may cover following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission and reception point (transmission and reception point, TRP), a transmission point (transmission point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a network-side device in a 6G network, a device that performs a function of a base station in a future communication system, or the like. The base station may support networks using a same access technology or different access technologies. The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station. A specific technology and a specific device form used by the access network device are not limited in embodiments of this application.

In some deployments, the gNB may include a CU and a DU. The gNB may further include an active antenna unit (active antenna unit, AAU). The CU implements some functions of the gNB. The DU implements some functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be used as a network device in an access network, or may be used as a network device in a core network (core network, CN). This is not limited in this application.

In addition, the terminal device (for example, the terminal device 103 and the terminal device 104) in this embodiment of this application may be a device that provides voice/data connectivity for a user, for example, a handheld device or a vehicle-mounted device with a wireless connection function; may be a device in internet of vehicles communication, for example, a communication terminal uploaded by a vehicle or a road side unit (road side unit, RSU); may be a communication terminal carried on an uncrewed aerial vehicle; or may be a terminal device in an internet of things (internet of things, IoT) system. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

For example, the terminal device includes but is not limited to: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network or a terminal device in a next-generation communication system (for example, a 6G communication system), a terminal device in a future evolved public land mobile network (public land mobile network, PLMN), or the like. A specific form of the terminal device is not limited in embodiments of this application.

The access network device and the terminal device may be deployed on land, and include an indoor or outdoor device, a handheld device, or a vehicle-mounted device; or may be deployed on water; or may be deployed on an airplane, a balloon, and a satellite in air. Application scenarios of the access network device and the terminal device are not limited in embodiments of this application.

It should be understood that in a future communication system, for example, a 6G communication system, the foregoing device may still use a name of the device in the 5G communication system, or may have another name. This is not limited in embodiments of this application. Functions of the foregoing devices may be implemented by one independent device, or may be jointly implemented by several devices. During actual deployment, network elements in the core network may be deployed on a same physical device or different physical devices. This is not limited in embodiments of this application. FIG. 1 is merely an example, and does not constitute any limitation on the protection scope of this application. The communication method provided in embodiments of this application may further relate to a network element or a device that is not shown in FIG. 1. Certainly, the communication method provided in embodiments of this application may alternatively include only some devices shown in FIG. 1. This is not limited in embodiments of this application.

The communication system 100 used in this embodiment of this application is merely an example for description, and the communication system applicable to this embodiment of this application is not limited thereto. Any communication system that can implement functions of the foregoing devices is applicable to this embodiment of this application.

In this embodiment of this application, unless otherwise specified, the network device is an access network device. The terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device or the network device or may be performed by a functional module (for example, a processor, a chip, or a chip system) that is in the terminal device or the network device and that can invoke and execute the program.

With reference to the communication system 100, FIG. 2 shows a cloud-edge collaboration scenario 200 applicable to the communication system 100. The cloud-edge collaboration scenario 200 is a scenario in which service data is processed through collaboration of cloud computing and edge computing. The cloud-edge collaboration scenario 200 includes a scheduler (not shown in FIG. 2), a cloud central node, and an edge node. The cloud central node (that is, a cloud-side computing power node) may be configured to process some non-latency-sensitive data, and the edge node (that is, an edge-side computing power node) is configured to process some data that has a high timeliness requirement and cannot be sent to the cloud central node for processing due to high costs. The cloud-side computing power node may be deployed in a network device (for example, a core network device 101) of a core network (Core Network, CN), and the cloud-side computing power node may also be located in a computing cloud. The cloud-side computing power node has specific computing power resources, for example, a computing resource, a memory (memory) resource, and a storage (Storage) resource. The computing resource includes but is not limited to a central processing unit (Central Processing Unit, CPU), a graphics processing unit (Graphics Processing Unit, GPU), a field programmable gate array (Field Programmable Gate Array, FPGA), and an application-specific integrated circuit (Application-Specific Integrated Circuit, ASIC).

The edge-side computing power node is also referred to as an edge-side computing power node, and may be deployed in a radio access network (Radio Access Network, RAN) (for example, an access network device 102), or may be an edge network device (for example, a gateway or a switch) deployed in the core network, or may be a server deployed near a RAN side. The edge-side computing power node has specific capabilities such as computing, transmission, and storage. The edge-side computing power node also has specific computing power resources and can process a processing task delivered by the scheduler.

The scheduler may be deployed in a network device on a cloud side or an edge side.

For example, the scheduler may schedule, based on a service requirement, the cloud central node and the edge node to collaboratively process the service data. Specifically, the scheduler may separately indicate, based on the service requirement, the cloud central node and the edge node to create a plurality of execution units, so as to implement collaborative processing of the service data by scheduling the plurality of execution units.

With reference to the communication system 100, FIG. 3 further shows a network-terminal collaboration scenario applicable to the communication system 100. In the network-terminal collaboration scenario, a network device (for example, an access network device 102) delivers, based on a service data processing requirement, a part of service data processing tasks to a terminal device (for example, a terminal device 103) for execution. Before delivering the task, the network device indicates the terminal device to create an execution unit for processing the task. Specifically, the network device sends, to the terminal device, resource information such as a computing resource, a storage resource, and a network resource that are required for processing the task, so that the terminal device creates the execution unit (for example, an execution unit 1, an execution unit 2, ...) based on the resource information. After the terminal device creates the execution unit, the network device delivers the service data processing task to the terminal device. The execution unit of the terminal device executes the service data processing task and reports a processing result to the network device.

The foregoing describes content such as a communication system and an application scenario to which embodiments of this application are applicable. The following describes a state information sending method provided in this application by using a scenario in which a network device and a terminal device collaboratively process service data as an example.

The method may be performed by the terminal device or the network device, or may be performed by a chip used in the terminal device or the network device. The following uses an example in which the method is performed by the terminal device for description.

A network architecture and a service scenario described in embodiments are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

As described in the background, with diversity of AI service types and complexity of model sizes, when an AI service is executed in a cloud/edge environment in which a plurality of computing power nodes (such as a cloud-side computing power node and an edge-side computing power node) are deployed, a problem of low resource utilization exists. For example, after an execution unit is created by a computing power node, regardless of whether the execution unit is processing a task, a scheduler generally does not allocate a resource (for example, a computing resource or a spectrum resource) occupied by the execution unit to another execution unit. Consequently, a problem of low resource utilization in some scenarios easily occurs. For example, in a network-terminal collaboration scenario, a computing capability that can be provided by the terminal device (for example, a mobile phone, a computer, a wearable device, a smart home, or a vehicle-mounted device) is increasingly enhanced, and services carried by the terminal device are diversified. The terminal device may participate in computing power collaboration, in other words, the network device deploys an execution unit on the terminal device to enable the terminal device to participate in computing power collaboration on a network side. However, because a computing power resource of the terminal device is limited and an environment of a radio channel between the terminal device and the network device is dynamic (for example, a state of the radio channel may deteriorate at any time), a problem of low resource utilization occurs.

Therefore, this application provides a state information sending method. The method can improve resource utilization. The method relates to interaction between network devices (for example, a cloud-edge collaboration scenario) and interaction between a network device and a terminal device (for example, a network-terminal collaboration scenario). The network device may be the access network device 102 or the core network device 101 shown in FIG. 1, and the terminal device may be the terminal device 103 or the terminal device 104 shown in FIG. 1. In the cloud-edge collaboration scenario, both a first device and a second device are network devices. In the network-terminal collaboration scenario, the first device is a terminal device, and the second device is a network device.

In the following embodiments, the network-terminal collaboration scenario is used as an example to describe the state information sending method provided in this application. In the network-terminal collaboration scenario, the first device is a terminal device, and the second device is a network device.

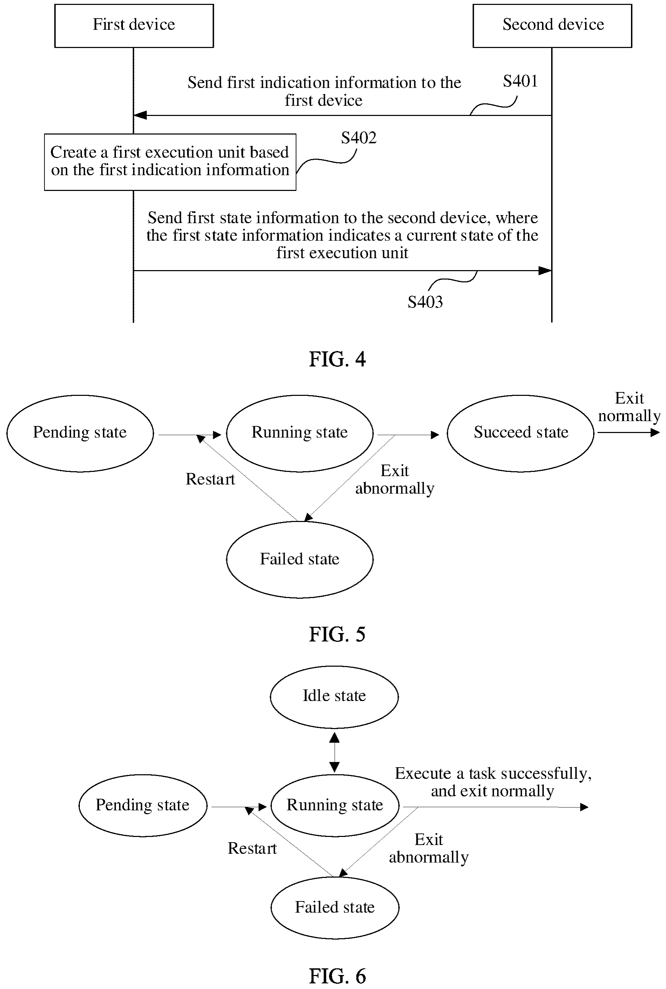

FIG. 4 is a diagram of an interaction procedure of sending state information according to an embodiment of this application. The method includes the following steps.

S401: A network device (that is, a second device) sends first indication information to a terminal device (that is, a first device). Correspondingly, the terminal device receives the first indication information from the network device, where the first indication information indicates the terminal device to create at least one execution unit.

The network device may be a base station, for example, a relay station or a home base station. The terminal device may be a mobile phone, a tablet computer, a wearable device, or the like.

It should be noted that, in a network-terminal collaboration scenario, if the network device schedules the terminal device to provide a computing power resource to participate in task processing in cloud-device, cloud-edge-device, and edge-device collaboration scenarios, the network device needs to indicate the terminal device to deploy an execution unit that can process a task. The execution unit created by the terminal device may be in a plurality of states in an entire life cycle (to be specific, from creation, task running, task execution to exit). For example, there are four cases that the execution unit undergoes in the entire life cycle.

Case 1: In a normal situation, the execution unit undergoes three states from creation, task running, task completion to exit: a pending (pending) state, a running (running) state, and a succeed (succeed) state.

Case 2: In an abnormal situation, the execution unit undergoes the following four states from creation, task running, task completion (or task non-completion) to exit: a pending (pending) state, a running (running) state, a failed (failed) state, and a succeed (succeed) state, as shown in FIG. 5. In this case, when the execution unit abnormally exits from the running state to the failed state, the execution unit may be recovered from the failed state to the running state after being restarted.

Case 3: In a normal situation, the execution unit undergoes four states from creation, task running, task completion to exit: a pending (pending) state, a running (running) state, an idle (idle) state, and a succeed (succeed) state. It should be noted that, when the execution unit is in the running state, the execution unit supports being switched from the running state to the idle state.

Case 4: In an abnormal situation, the execution unit undergoes the following five states from creation, task running, task completion (or task non-completion) to exit: a pending (pending) state, a running (running) state, a failed (failed) state, an idle (idle) state, and a succeed (succeed) state, as shown in FIG. 6. In this case, when the execution unit abnormally exits from the running state to the failed state, the execution unit may be recovered from the failed state to the running state after being restarted. In addition, the execution unit may be switched between the running state and the idle state.

It should be noted that the pending state is a state of the execution unit during a creation process. When the execution unit is in the pending state, the execution unit temporarily cannot process a task, for example, cannot download an image file, an execution file, or a configuration file.

The running state is a state of the execution unit when the execution unit is successfully created. In this case, the execution unit in the running state can normally process a task and occupies a fixed computing power resource N.

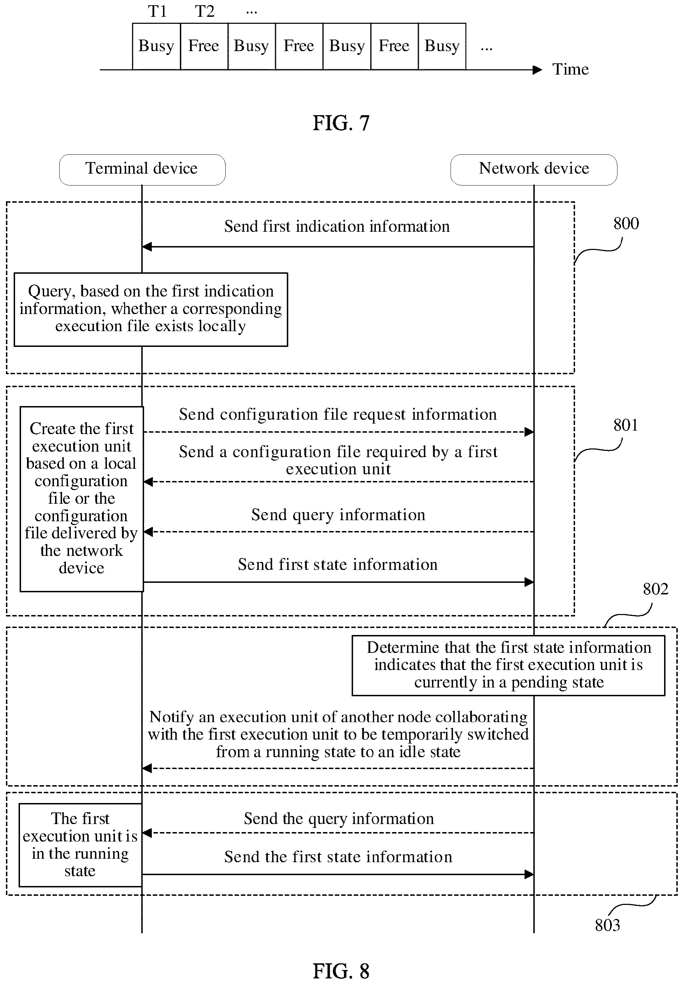

The idle state is a state of the execution unit during its sleep process. In this case, the execution unit in the idle state does not process any task and occupies only a few computing power resources M. The computing power resource M is far less than the computing power resource N occupied in the running state. As shown in FIG. 7, the execution unit may be in different states at different moments. For example, the running state and the idle state of the execution unit alternate with each other, and busy and free states of corresponding resources also alternate with each other. For example, at a moment T1, the execution unit is in the running state, and a corresponding computing power resource is in the busy state; at a moment T2, the execution unit is in the idle state, and a corresponding computing power resource is in the free state; and so on.

The failed state is a state of the execution unit when an anomaly occurs during running of the execution unit. In this case, the execution unit cannot process a task normally.

The succeed state is a state of the execution unit after the execution unit completes a computing task. In this case, the execution unit may exit normally.

In a possible implementation of this application, the network device sends the first indication information to the terminal device, to indicate the terminal device to create an execution unit. The execution unit may undergo one of the foregoing four cases. For example, when participating in computing power collaboration in scenarios such as a cloud-device scenario and an edge-device scenario, the execution unit undergoes the pending state, the running state, the idle state, and the succeed state.

The first indication information includes a type of a task that can be processed by each execution unit, and an execution file, a running environment, and an occupied computing resource that are required for creating each execution unit. It should be understood that, types of tasks that can be processed by different execution units are not necessarily the same, and information, for example, execution files, required by execution units for processing different task types is also different.

For example, one service may be split into a plurality of parts. Because each part has a different function, each part corresponds to a different task type. For example, an AI positioning service includes three parts: pre-processing, AI inference, and post-processing. The network device may use the pre-processing as a task type 1, the AI inference as a task type 2, and the post-processing as a task type 3. Each task type may include at least one task. Generally, each task type includes a plurality of tasks. All execution units created by the terminal device are specific to a specific task type. For example, a first execution unit created by the terminal device can process only a task of the task type 1 (where it should be understood that one or more execution units for processing a same task type may be created, and each execution unit has a corresponding unique identifier), and cannot process a task of the task type 2 or the task type 3. If the task type 2 needs to be processed, the network device needs to create a specific second execution unit for the task type 2 on the current terminal device or another computing power node. The second execution unit can process only the task type 2. If the task type 3 needs to be processed, the network device needs to create a specific third execution unit for the task type 3 on the current terminal device or another computing power node. The third execution unit can process only the task type 3.

For another example, an execution unit 1 and an execution unit 2 that are created by the terminal device can collaboratively process a task of the task type 1, but cannot process a task of the task type 2 or the task type 3. If the task type 2 needs to be processed, the network device needs to create a specific execution unit 3 for the task type 2 on the current terminal device or another computing power node. The execution unit 3 can process only the task type 2. If the task type 3 needs to be processed, the network device needs to create a specific execution unit 4, execution unit 5, and execution unit 6 for the task type 3 on the current terminal device or another computing power node to collaboratively process the task type 3.

It can be learned that, for processing tasks of a same task type, the network device may indicate one terminal device to create at least one execution unit to process the processing tasks of the same type, and the at least one execution unit is located on the same terminal device (that is, a same computing power node). Optionally, all of the at least one execution unit may be created simultaneously or may be created in sequence, and this is not limited herein. Certainly, the network device may alternatively indicate a plurality of different terminal devices (that is, a plurality of different computing power nodes) to create a plurality of execution units to collaboratively process the processing tasks of the same type, and the plurality of execution units are located on the plurality of different terminal devices. Optionally, the plurality of execution units may be created simultaneously, may be created in sequence, or may be created according to a preset rule (for example, based on a resource usage priority), and this is not limited in this application.

S402: The terminal device (that is, the first device) creates the first execution unit based on the first indication information.

It should be noted that the first execution unit is any one of the at least one execution unit.

The network device sends the first indication information to the terminal device. Correspondingly, after receiving the first indication information sent by the network device, the terminal device queries whether a corresponding configuration file for creating the first execution unit exists locally. As shown in 800 in FIG. 8, the configuration file includes but is not limited to an execution file and a running environment construction file that are for the first execution unit to execute a matched task type.

In a possible implementation, as shown in 801 in FIG. 8, when the terminal device locally finds the corresponding configuration file for creating the first execution unit, the terminal device directly creates the first execution unit based on the configuration file corresponding to the first execution unit. In this case, a state of the first execution unit is the pending (pending) state.

In another possible implementation, as shown in 801 in FIG. 8, when the terminal device does not locally find the corresponding configuration file for creating the first execution unit, the terminal device sends configuration file request information to the network device, where the configuration file request information is used for requesting the network device to deliver the corresponding configuration file for creating the first execution unit. After receiving the configuration file request information, the network device sends, to the terminal device, the configuration file that is stored in the network device and that is required by the first execution unit. The terminal device creates the first execution unit based on the configuration file that corresponds to the first execution unit and that is delivered by the network device. In this case, a state of the first execution unit is the pending (pending) state.

S403: The terminal device (that is, the first device) sends first state information to the network device (that is, the second device). Correspondingly, the network device receives the first state information from the terminal device, where the first state information indicates the current state of the first execution unit.

It should be noted that the first state information may be state information reported by the terminal device when the first execution unit is in the pending state or may be state information reported when the first execution unit is in the running state.

For example, that the terminal device reports the first state information when the first execution unit is in the pending state may be implemented in the following two manners.

Manner 1: In a process of creating the first execution unit, the terminal device may send the first state information to the network device based on first configuration information. Correspondingly, the network device receives the first state information from the terminal device based on the first configuration information. The first configuration information is used for configuring a reporting moment of the at least one execution unit. The first configuration information may be preset in a protocol or may be configured by the network device. For example, the network device may configure the first configuration information by using radio resource control (Radio Resource Control, RRC) signaling, a control element (Control Element, CE) at a media access control (Media Access Control, MAC) layer, or another manner. For example, the first configuration information is used for configuring the terminal device to report the first state information at an interval of one minute. The reporting moment means that the terminal device reports the first state information to the network device based on a preset periodicity or a preset time interval. The first state information includes an identifier of the terminal device, an identifier of the first execution unit, and the current state (for example, the pending state) of the first execution unit.

In Manner 1, compared with a real-time reporting manner, the terminal device reports the first state information based on the first configuration information, and correspondingly, the network device receives the first state information based on the first configuration information, so that it can be ensured that the network device learns of the state of the first execution unit in time, and a waste of communication resources caused by frequent reporting can be avoided.

Manner 2: In a process of creating the first execution unit, the terminal device sends the first state information to the network device based on query information of the network device, as shown in 801 in FIG. 8. The query information is used for querying the state of the first execution unit.

For example, the network device sends first state query information (that is, the query information) to the terminal device. The first state query information includes an identifier of the terminal device, an identifier of the first execution unit, and the current state of the first execution unit. The terminal device sends (that is, reports) the first state information to the network device based on the received first state query information. For content included in the first state information, refer to Manner 1. Details are not described again.

In Manner 2, the network device requires, in a query manner, the first execution unit to report the first state information, to determine, in time, whether creation of the first execution unit is normal. If the creation of the first execution unit is abnormal, the network device may notify, in time, the terminal device to delete the first execution unit, to ensure that the terminal device retrieves, in time, a computing resource occupied by the first execution unit, so that another execution unit on the terminal device uses the computing resource, or a new execution unit is created, thereby improving resource utilization.

Regardless of whether the terminal device reports the first state information in Manner 1 or Manner 2, after receiving the first state information, the network device may process the first state information in the following three manners.

Manner a: If the first state information received by the network device indicates that the first execution unit is currently in the pending (pending) state, the network device may notify an execution unit of another node (that is, another terminal device) collaborating with the first execution unit to be temporarily switched from the running (running) state to the idle (idle) state, as shown in 802 in FIG. 8. For example, when an execution unit i (for example, the first execution unit) of a terminal device A collaborates with an execution unit j in the running state of another terminal device B (that is, a computing power node B), an input of the execution unit j depends on an output of the execution unit i. If the execution unit i is in the pending state in this case, the network device may first switch the execution unit j from the running state to the idle state, and then switch the execution unit j to the running state when the execution unit j receives input data from the execution unit i.

Manner b: If the network device receives, within preset duration, no first state information indicating that the first execution unit is in the running state (that is, the first execution unit is always in the pending state within the preset duration), the network device may send deletion indication information to the terminal device, to indicate the terminal device to delete the first execution unit, so as to release the computing resource occupied by the first execution unit, so that a problem of low resource utilization caused by occupying a resource for a long period of time is avoided. The deletion indication information includes the identifier of the terminal device, the identifier of the first execution unit, and deletion information. Optionally, the network device may alternatively migrate a task that is not executed by the first execution unit to an execution unit on another computing power node for processing.

Manner c: If the first state information received by the network device indicates that the first execution unit is currently in the pending state, the network device may not perform processing, but only report the first state information to another functional module for other processing. For example, the network device reports the first state information to a scheduler, so that the scheduler generates a better scheduling strategy.

For example, that the terminal device reports the first state information when the first execution unit is in the running state (that is, after the first execution unit is successfully created) may also be implemented in Manner 1 and Manner 2. As shown in 803 in FIG. 8, the network device sends the query information, and the terminal device reports the first state information. For details, refer to the foregoing related descriptions. Details are not described herein again.

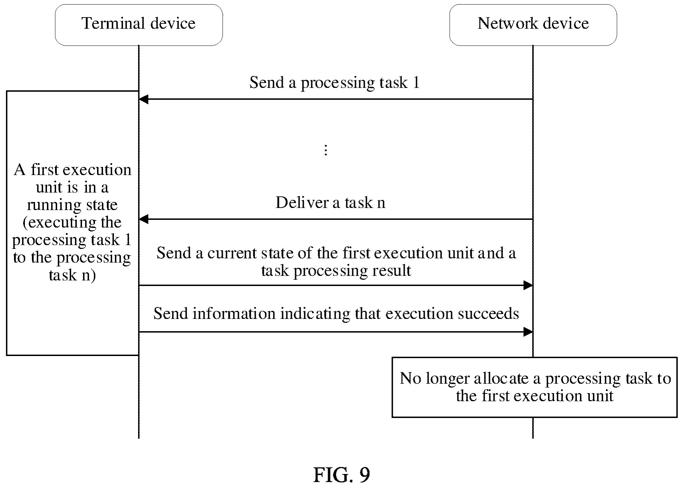

As shown in FIG. 9, after the terminal device reports the first state information to the network device, where the first state information indicates that the first execution unit is in the running state, the network device allocates a proper type of processing task (for example, a processing task 1, ..., or a processing task n) to the first execution unit. For example, the network device sends (that is, delivers) task indication information to the terminal device. The task indication information includes the identifier of the terminal device, the identifier of the first execution unit, an identifier of a task type, and a quantity of tasks (for example, n processing tasks). After receiving the task indication information from the network device, the terminal device executes the processing task 1 to the processing task n, and sends the current state of the first execution unit and a task processing result to the network device. Optionally, the terminal device may report the task processing result to the network device by using the first state information. After the first execution unit completes execution of a task, the terminal device sends, to the network device, information indicating that the execution succeeds, and controls the first execution unit to exit normally, to release the computing resource occupied by the first execution unit. Correspondingly, after receiving the information indicating that the execution succeeds, the network device no longer allocates a processing task to the first execution unit. After controlling the first execution unit to exit, the terminal device reports completion information to the network device. The completion information includes the identifier of the terminal device, the identifier of the first execution unit, task completion information, and resource release information. After receiving the completion information, the network device no longer allocates a task to the first execution unit.

In the foregoing embodiment, the terminal device creates the first execution unit based on the first indication information and reports the state (that is, the first state information) of the first execution unit to the network device in time, so that the network device adjusts the scheduling strategy in time, to improve scheduling performance, ensure service continuity, and improve resource utilization. For example, in some cases, the first execution unit is not executing a task, but is always in the running state, and occupies a large amount of a computing power resource. If the first device reports the state of the first execution unit to the second device in time, the second device may process the first execution unit immediately, for example, delete the first execution unit or switch the first execution unit to the idle state, to release an idle computing power resource for processing another service, thereby ensuring service continuity and improving resource utilization.

In a possible implementation, before step S402, the method includes the following.

When indicating, by using the first indication information, the terminal device to create the at least one execution unit, the network device indicates, by using the first indication information, the terminal device to allocate a priority to each execution unit. The first indication information further includes a quantity of created execution units, a type of a task that can be processed by each execution unit, a required execution file, a required running environment, a required computing power resource, and priority information. The priority information indicates a sequence in which the execution units use computing power resources. When indicating the terminal device to create the execution unit, the network device may assign different priorities to the execution units based on importance and real-time requirements of types of tasks executed by the execution units, so that the terminal device creates an execution unit with a priority. For example, the network device may indicate the terminal device to allocate N priorities (levels) to N execution units, that is, allocate level_0 to level_N-1 to the N execution units, where N is a positive integer, level_0 represents a highest priority, and level_N-1 represents a lowest priority, that is, a larger priority value indicates a lower priority.

For example, N=3, and the terminal device allocates, based on a priority sequence of the three execution units indicated by the first indication information, a priority level_1 to the first execution unit, a priority level_2 to the second execution unit, and a priority level_0 to the third execution unit. Apparently, the priority of the second execution unit is lower than the priority of the first execution unit, and the priority of the first execution unit is lower than the priority of the third execution unit. When a computing power resource of the terminal device is fixed, at a moment T, the three execution units are all in the running state. If the network device indicates the terminal device to create a new execution unit, the network device may indicate the terminal device to switch an execution unit (for example, the second execution unit) with a low priority from the running state to the idle state (this is because a computing power resource occupied by the execution unit in the idle state is far less than a computing power resource occupied by the execution unit in the running state), to release a part of computing power resources for creating the new execution unit.

In this embodiment, the network device indicates, by using the first indication information, the terminal device to create an execution unit with a priority, to determine, based on the priorities of the execution units, which execution units can be switched from the running state to the idle state, to release a part of computing power resources for another service requirement. Certainly, the network device may alternatively determine, based on the priorities of the execution units, which execution units are switched from the idle state to the running state. This manner can improve resource utilization and ensure real-time performance of a service.

In an embodiment, when a free resource of the terminal device does not meet a resource requirement of the first execution unit, the terminal device switches the second execution unit from the running state to the idle state. A resource occupied by the second execution unit in the idle state is less than a resource occupied by the second execution unit in the running state. That the terminal device creates the first execution unit based on the first indication information includes: The terminal device creates the first execution unit based on the first indication information by using a released resource and the free resource, where the released resource includes a resource released after the second execution unit is switched from the running state to the idle state.

It should be noted that the second execution unit created by the terminal device undergoes the four states in Case 3 in an entire life cycle. The free resource of the terminal device is an unused computing power resource of the terminal device. The released resource includes a part or all of resources released after the second execution unit is switched from the running state to the idle state.

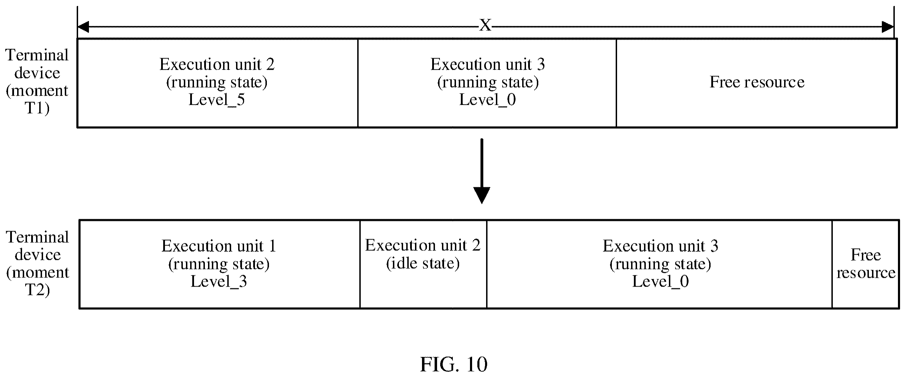

In an implementation, as shown in FIG. 10, an example in which a total computing power resource of the terminal device is X is used. At a moment T1, both an execution unit 3 (that is, the third execution unit) and an execution unit 2 (that is, the second execution unit) on the terminal device are in the running state. A priority of the execution unit 3 is level_0, and an occupied computing power resource is N1. A priority of the execution unit 2 is level_5, and an occupied computing power resource is N2. A free resource is X-N1-N2, and the priority of the execution unit 3 is higher than the priority of the execution unit 2. In this case, the network device indicates, by using the first indication information, the terminal device to create an execution unit 1 (that is, the first execution unit), where a priority of the execution unit 1 is level_3, a computing power resource required by the execution unit 1 is N3, and N3>the free resource X-N1-N2.

The free resource X-N1-N2 of the terminal device at the moment T1 does not meet a resource requirement of the execution unit 1 (to be specific, the computing power resource required by the execution unit 1). Therefore, the network device sends state switching information to the terminal device based on a priority sequence of the execution unit 1, the execution unit 2, and the execution unit 3 (that is, the priority of the execution unit 2<the priority of the execution unit 1<the priority of the execution unit 3), to indicate the terminal device to perform state switching on the execution unit 2 (where the priority of the execution unit 2 is lower than those of the execution unit 1 and the execution unit 3). The state switching information includes the identifier of the terminal device, an identifier of the execution unit 2, and idle-state switching information. After receiving the state switching information, the terminal device switches the execution unit 2 from the running state to the idle state to release a part of computing power resources occupied by the execution unit 2, and reports, to the network device, information indicating that the state switching of the execution unit 2 is completed. After the execution unit 2 is switched from the running state to the idle state, the execution unit 2 occupies only a computing power resource M1, and a released resource is N2-M1 (to be specific, the part of computing power resources occupied by the execution unit 2 in the running state are released). After receiving the information indicating that the state switching of the execution unit 2 is completed, a network side sends, to the terminal device, the first indication information for creating the execution unit 1. The first indication information includes a type of a task that can be processed by the execution unit 1, a required execution file, a running environment, an occupied computing power resource N3, and priority information (for example, level_3). The terminal device creates the execution unit 1 based on the first indication information. At a moment T2, the execution unit 1 is successfully created. In this case, the execution unit 3 on the terminal device is in the running state, a priority is level_0, and an occupied computing power resource is N1. The execution unit 2 is in the idle state, a priority is level_5, and an occupied computing power resource is M1 (where M2 is far less than N2). The execution unit 1 is in the running state, a priority is level_3, and an occupied computing power resource is N3. A free resource is X-N1-M1-N3.

Optionally, before creating the execution unit 1 based on the first indication information, the terminal device may alternatively delete the execution unit 2, to release all computing power resources occupied by the execution unit 2 in the running state. Then, the terminal device creates the execution unit 1 based on the first indication information, all the computing power resources released by the execution unit 2, and the free resource.

In another implementation, in addition to the type of the task that can be processed by each execution unit, and the execution file, the running environment, and the occupied computing resource that are required for creating each execution unit, the first indication information further includes priority information of the first execution unit. When a total computing power resource of the terminal device is fixed, and the free resource is insufficient to create the first execution unit, the terminal device compares a priority of the first execution unit with a priority of the second execution unit in the running state on the terminal device before creating the first execution unit based on the first indication information. If the priority of the second execution unit is lower than the priority of the first execution unit, the terminal device may switch the second execution unit from the running state to the idle state, to release a part of computing power resources, so as to create the first execution unit based on the first indication information, the released part of computing power resources, and the free resource. Optionally, if the priority of the second execution unit is lower than the priority of the first execution unit, the terminal device may alternatively delete the second execution unit, to release all computing power resources occupied by the second execution unit, so as to create the first execution unit based on the first indication information, all the released computing power resources, and the free resource.

It should be understood that, when the computing power resource of the terminal device is sufficient, the network device may further indicate the terminal device to switch the execution unit 2 from the idle state to the running state again for collaborative computing. In other words, when the computing power resource is limited, the terminal device may switch an execution unit with a low priority from the running state to the idle state, to release a part of computing power resources, so as to meet another service processing requirement; or when the computing power resource is sufficient, the terminal device may switch an execution unit with a high priority from the idle state to the running state.

In this embodiment, when indicating the terminal device to create an execution unit, the network device may allocate specific priorities to execution units based on real-time performance and importance of computing tasks carried by different execution units, so that the network device determines, based on the priorities of the execution units, which execution units can be switched from the running state to the idle state or from the idle state to the running state, instead of directly deleting the execution units. In this manner of setting a priority, deleting and recreating an execution unit can be reduced (because an issue of real-time performance exists during recreating). When the network device needs the execution unit to execute a task, the execution unit may be quickly switched from the idle state to the running state to participate in collaborative computing, so that real-time performance of service processing is enhanced. In addition, a computing resource of an execution unit with a low priority may be used for an execution unit with a high priority, so that resource utilization is improved, and user experience is enhanced.

With reference to the foregoing embodiment, step S403 further includes the following several implementations.

### Manner I

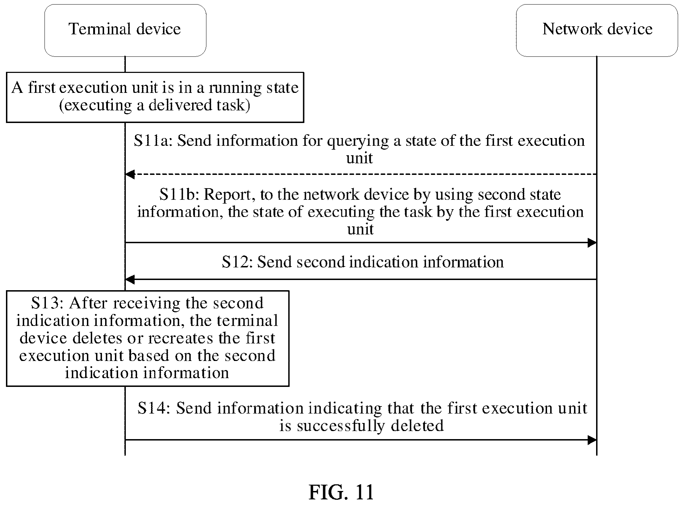

Before the failed state occurs, the first execution unit is in the running state, can normally process a processing task delivered by the network device, and reports state information of the first execution unit and a task processing result to the network device in time. For details, refer to the foregoing descriptions. Details are not described herein again. When the first execution unit is in the running state, the first execution unit may be deleted (deleted) or recreated (recreated) if an application program is abnormal and the first execution unit is in the failed state due to insufficient memory allocation in a running process. An implementation in which the terminal device deletes or recreates the first execution unit is shown in FIG. 11. The implementation includes steps S11 to S14.

S11a in S11: The network device sends, to the terminal device, information for querying the state of the first execution unit. Correspondingly, in S11b, the terminal device reports, to the network device by using second state information, a state of executing a task by the first execution unit, where the second state information indicates the task state of the first execution unit.

The second state information may be first state anomaly information or second state anomaly information. The first state anomaly information indicates that the first execution unit is in the failed state because the first execution unit does not complete the task, and the second state anomaly information indicates that first execution unit is in the failed state because the first execution unit temporarily has no processing task. The task state of the first execution unit includes a state when the first execution unit is in the failed state because the task is not completed, and a state when the first execution unit is in the failed state because no processing task exists temporarily.

It should be noted that the first execution unit is in the failed state due to two reasons. One reason is that when the first execution unit executes the processing task delivered by the network device, the task cannot be completed due to problems such as insufficient memory allocation and a data loading failure in the running process, causing the first execution unit to be in the failed state. The other reason is that the first execution unit temporarily has no processing task, causing the first execution unit to be in the failed state.

S12: The network device makes a decision based on the first state anomaly information or the second state anomaly information, and sends a decision result to the terminal device by using second indication information. The second indication information indicates the terminal device to delete or recreate the first execution unit, and the decision result includes deleting the first execution unit or recreating the first execution unit.

S13: After receiving the second indication information, the terminal device deletes or recreates the first execution unit based on the second indication information.

It should be noted that, after the terminal device deletes the first execution unit, the first execution unit does not exist, and the occupied computing power resource is 0 (in other words, all computing power resources occupied in the running state are released). After the terminal device successfully recreates the first execution unit, the first execution unit is in the running state.

S14: After deleting the first execution unit based on the second indication information, the terminal device sends, to the network device, information indicating that the first execution unit is successfully deleted. The information indicating that the deletion succeeds includes the identifier of the terminal device, the identifier of the first execution unit, and deletion success information. Alternatively, after recreating the first execution unit based on the second indication information, the terminal device sends, to the network device, information indicating that the first execution unit is successfully recreated. The information indicating that the recreating succeeds includes the identifier of the terminal device, the identifier of the first execution unit, and recreating success information.

The following describes an implementation process of steps S11 to S14 with reference to two examples.

Example 1: When the task of the first execution unit is not completed due to the problem such as insufficient memory allocation or the data loading failure in the running process, the first execution unit is in the failed state. In this case, the terminal device may report the state of the first execution unit to the network device by using the first state anomaly information, so that the network device determines a processing decision (for example, deleting or recreating the first execution unit) in time, thereby ensuring service continuity. The first state anomaly information includes but is not limited to the identifier of the terminal device, the identifier of the first execution unit, failed state information, and task non-completion information. Optionally, the first state anomaly information may further include an anomaly reason (for example, the data loading failure, a model error, an insufficient memory, and running timeout).

After receiving the first state anomaly information, the network device makes a decision in time (for example, determines to recreate or delete the first execution unit), and sends a decision result to the terminal device by using the second indication information. If the network device determines to delete the first execution unit, the network device sends the second indication information to the terminal device. The second indication information indicates to delete the first execution unit, and the second indication information herein includes the identifier of the terminal device, the identifier of the first execution unit, and the deletion indication information. After indicating the terminal device to delete the first execution unit, the network device migrates an uncompleted task of the first execution unit to another computing power node for continued execution.

If the network device determines to recreate the first execution unit, the network device sends the second indication information to the terminal device. The second indication information indicates the terminal device to recreate the first execution unit, and the second indication information herein includes the identifier of the terminal device, the identifier of the first execution unit, and recreating indication information. After waiting for the terminal device to complete recreating the first execution unit, the network device sends second configuration information to the terminal device. The second configuration information is used for configuring a task matching the first execution unit. After receiving the second configuration information, the terminal device indicates, based on the second configuration information, the first execution unit to continue to execute an uncompleted task, so that service processing continuity is ensured.

Example 2: When the first execution unit is in the failed state because no processing task exists temporarily, the terminal device may report the state of the first execution unit to the network device by using the second state anomaly information. The second state anomaly information includes but is not limited to the identifier of the terminal device, the identifier of the first execution unit, failed state information, and task completion information. Optionally, the second state anomaly information may further include an anomaly reason (for example, a data acquisition failure and no processing task indication).

After receiving the second state anomaly information, the network device also makes a decision (for example, determines to recreate or delete the first execution unit) and sends a decision result to the terminal device by using the second indication information. If the network device determines to delete the first execution unit, the network device sends the second indication information to the terminal device. The second indication information indicates to delete the first execution unit, and the second indication information herein includes the identifier of the terminal device, the identifier of the first execution unit, and the deletion indication information. After indicating the terminal device to delete the first execution unit, the network device no longer allocates a processing task to the deleted first execution unit subsequently.

If the network device determines to recreate the first execution unit, the network device also sends, to the terminal device, the second indication information indicating to recreate the first execution unit. The second indication information herein includes the identifier of the terminal device, the identifier of the first execution unit, and recreating indication information. After waiting for the terminal device to complete recreating the first execution unit, the network device sends second configuration information to the terminal device. The terminal device indicates, based on the received second configuration information, the first execution unit to execute a new processing task.

Optionally, in an entire process in which the first execution unit is in the failed state, and the network device determines to delete or recreate the first execution unit, the network device may notify other computing power nodes (for example) collaborating with the first execution unit, and indicate these computing power nodes to switch an affected execution unit from the running state to the idle state, to avoid a case in which the affected execution unit in the running state occupies a computing power resource for a long period of time because the affected execution unit cannot continue to execute a task. It should be understood that the affected execution unit is an execution unit that needs to use, as an input, an output result of an uncompleted task calculated by the first execution unit, to continue to perform computing.

Optionally, when the first execution unit is in the failed state, the terminal device may first delete or recreate the first execution unit, and then report a processing result of deleting or recreating the first execution unit to the network device, so that the network device learns of a real-time state of the first execution unit in time.

It can be learned that, when the first execution unit is in the failed state, the terminal device reports the current state of the first execution unit to the network device in time, so that the network device determines, in time, based on a reporting status of the terminal device, whether to delete or recreate the first execution unit, thereby ensuring service continuity and service undergo of a user.

### Manner II

The first execution unit created by the terminal device supports being switched from the running state to the idle state. When the terminal device does not delete the first execution unit, the terminal device requests the network device to switch the first execution unit from the running state to the idle state or from the idle state to the running state.

That the terminal device deletes the first execution unit includes the following cases: In a case a, the first execution unit is deleted after a task is executed; and in a case b, the first execution unit is in the failed state and is deleted. For details, refer to the foregoing descriptions. Details are not described herein again.

The first execution unit of the terminal device may be switched from the running state to the idle state (the running state -> the idle state), or may be switched from the idle state to the running state (the idle state -> the running state). In different scenarios, manners in which the terminal device requests the network device to switch the state of the first execution unit are different.

When the first execution unit is in the running state, the terminal device may request the network device to switch the first execution unit from the running state to the idle state (that is, the running state -> the idle state).

It should be noted that the terminal device may request, based on one or more of the following reasons, the network device to switch the first execution unit from the running state to the idle state: Power is insufficient, no task is executable temporarily, another service has a resource requirement (for example, an execution unit with a higher priority has a computing power resource requirement), or a current state of a radio channel is poor (for example, the poor state of the radio channel affects data transmission, and further affects collaborative computing).

When the first execution unit is in the idle state, the terminal device may alternatively request the network device to switch the first execution unit from the idle state to the running state (that is, the idle state -> the running state).

It should be noted that the terminal device may request, based on one or more of the following reasons, the network device to switch the first execution unit from the idle state to the running state: Power is sufficient, a resource for another service to perform computing is released, a priority of a task executed by the first execution unit becomes higher, or a channel state becomes good.

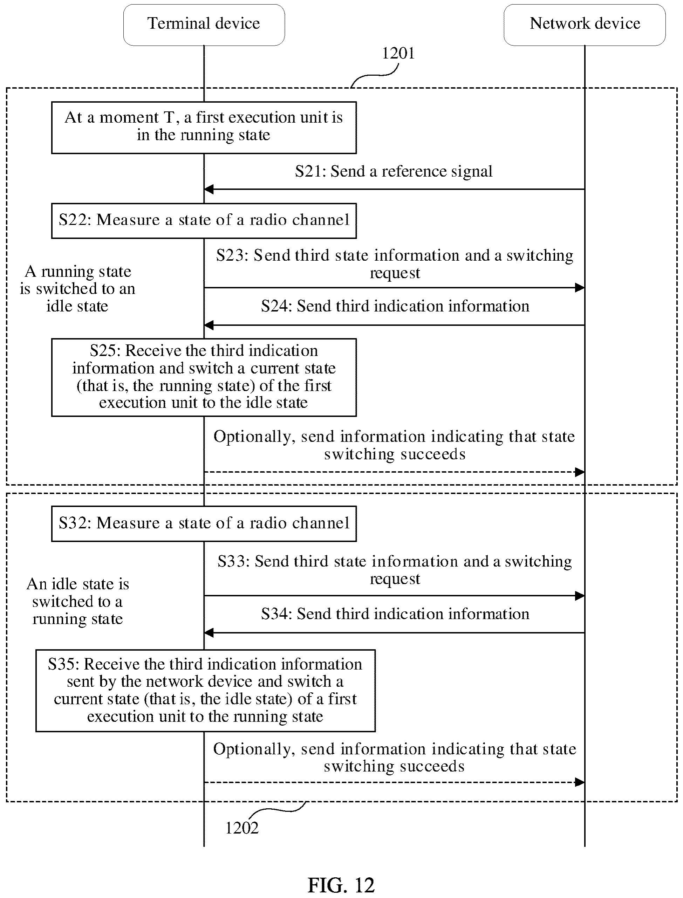

An implementation in which the terminal device requests the network device to switch the first execution unit from the running state to the idle state (the running state -> the idle state) is described below by using a scenario in which the current state of the radio channel is poor in the terminal device. As shown in 1201 in FIG. 12, the implementation includes steps S21 to S25.

S21: At a moment T, the first execution unit of the terminal device is in the running state (that is, the first execution unit is executing a task), and the network device sends a reference signal to the terminal device. Correspondingly, the terminal device receives the reference signal sent by the network device.

The reference signal is used for measuring the state of the radio channel, and the reference signal may be a channel state information-reference signal (Channel State Information-Reference Signal, CSI-RS). The CSI-RS includes a channel quality indicator (Channel Quality Indicator, CQI), a rank indicator (Rank Indicator, RI), and a precoding indicator (Precoder Matrix Indicator, PMI).

S22: After receiving the reference signal, the terminal device measures the state of the radio channel (for example, a downlink channel state), and sends, to the network device by using third state information, a result (that is, a channel measurement result) of comparing a channel measurement result with a threshold. The third state information is used by the network device to send third indication information, and further indicates the state of the radio channel between the terminal device and the network device. For related descriptions of the third indication information, refer to the following step S24.

If the channel measurement result indicates that a signal-to-noise ratio (Signal-to-Noise Ratio, SNR) of the channel at the moment T is lower than the threshold, it indicates that the current state of the channel cannot meet a data transmission requirement for the terminal device to participate in collaborative computing. The terminal device may report the channel measurement result at the moment T to the network device and request the network device to switch the first execution unit from the running state to the idle state.

It should be noted that the threshold may be preset in a protocol, or may be configured by a network. For example, the network device configures the threshold by using RRC signaling at L3. For related descriptions of L3, refer to the following step S23. Details are not described herein.

S23: When the channel measurement result indicates that the first execution unit is not suitable for computing power collaboration, the terminal device may send the third state information and a switching request to the network device, to avoid a case in which the network device continues to deliver a processing task to the first execution unit when quality of the channel is poor but the first execution unit cannot process the processing task in time. The switching request is used for requesting to switch the state of the first execution unit.

It should be noted that the terminal device may send the third state information and the switching request to the network device together, or may send the third state information and the switching request separately (to be specific, the third state information is sent separately, and is not sent together with the switching request or the first state information). Certainly, the third state information and the first state information may alternatively be sent by using same signaling, or the third state information, the first state information, and the switching request may be sent by using same signaling. This is not limited in this application.

When the third state information and the switching request are separately sent (that is, sent by using different signaling), the switching request includes the identifier of the terminal device, the identifier of the first execution unit, a task completion status, and idle-state switching information. Optionally, the switching request may further include idle-state duration or a switching reason.

When the third state information and the switching request are sent together (that is, sent by using same signaling), the switching request includes the identifier of the terminal device, the identifier of the first execution unit, a task completion status, the channel measurement result, and idle-state switching information. Optionally, the switching request may further include idle-state duration or a switching reason.

When the third state information and the first state information are sent by using same signaling, the third state information and second state information may be indicated by using two different fields in the same signaling (for example, RRC signaling).

It should be noted that, regardless of whether the third state information and the switching request are sent together or separately, the third state information and the first state information are sent together, or the third state information, the first state information, and the switching request are sent together, interaction information sent between the terminal device and the network device may be transmitted by using control signaling at layer1, layer2, or layer3 on a RAN side in a 3rd generation partnership project (3rd Generation Partnership Project, 3GPP).

For downlink sending information, the network device may send the downlink sending information in the following three manners:
Manner al: The network device delivers downlink control information (for example, the first indication information or the second indication information) to the terminal device by using a downlink control information (Downlink Control Information, DCI) instruction at a physical layer (Physical Layer). The downlink control information may be independently sent, or may be delivered only together with other downlink control information (for example, radio resource scheduling information). It should be understood that the physical layer is also referred to as layer1 or L1.
Manner a2: The network device delivers downlink control information (for example, the first indication information) to the terminal device by using a control element (Control Element, CE) at a media access control (Media Access Control, MAC) layer. The downlink control information may be independently sent, or may be delivered only together with other downlink control information (for example, timing advance (Time advance command)). It should be understood that the MAC layer is also referred to as layer2 or L2.
Manner a3: The network device may alternatively deliver downlink control information to the terminal device by using RRC signaling at an RRC layer. Similarly, the downlink control information may be independently sent, or may be delivered together with other RRC signaling (for example, RRC reconfiguration information, RRC reconfiguration completion information, and cell handover information). It should be understood that the RRC layer is also referred to as layer3 or L3.

For uplink sending information, the terminal device may send the uplink sending information in the following three manners:
Manner b1: The terminal device sends uplink control information (Uplink Control Information, UCI) to the network device by using a physical uplink control channel (Physical Uplink Control Channel, PUCCH) or a physical uplink shared channel (Physical Uplink Shared Channel, PUSCH) at layer1. The uplink control information may be used by the terminal device to report state information (for example, the first state information) of an execution unit. The uplink control information may be independently sent, or may be uploaded together with other uplink control information (for example, channel state information, an acknowledgement (Acknowledgement, ACK), or (Negative Acknowledgement, NACK)).
Manner b2: The terminal device sends UCI to the network device by using a CE at layer2. The UCI may be sent independently, or may be sent together with other information (for example, a buffer status report BSR (buffer status report)).
Manner b3: The terminal device may alternatively send UCI to the network device by using RRC signaling at layer3. The UCI may be independently sent, or may be uploaded together with other RRC signaling (for example, RRC connection reconfiguration completion information).

The following describes, by using an example, a process of sending interaction information between the terminal device and the network device.

For example, the network device sends a reference signal of a downlink channel to the terminal device by using the RRC signaling at layer3. After receiving the reference signal of the downlink channel, the terminal device performs state measurement on the downlink channel, and sends the third state information (that is, a channel measurement result of the downlink channel) to the network device by using the RRC signaling at layer3. Optionally, both the third state information and the first state information are sent to the network device by using the RRC signaling at layer3, so that the network device sends the third indication information based on the third state information and the first state information (for example, the running state or the idle state). Optionally, the third state information, the first state information, and the switching request may alternatively be sent to the network device together by using the RRC signaling at layer3, so that the network device sends the third indication information based on the third state information, the first state information (for example, the running state or the idle state), and the switching request. It can be learned that, regardless of whether the third state information is sent together with the switching request or sent together with the first state information, or the third state information, the first state information, and the switching request are sent together, signaling overheads can be reduced.

For another example, the network device sends a reference signal of a downlink channel to the terminal device by using the CE at layer2. After receiving the reference signal of the downlink channel, the terminal device performs state measurement on the downlink channel, and sends the third state information (that is, a channel measurement result of the downlink channel) together with the switching request to the network device by using the CE at layer2.

S24: After receiving the third state information and the switching request (or after receiving the third state information, the first state information, and the switching request), the network device makes a decision based on the third state information and the switching request (or based on the third state information, the first state information, and the switching request), and sends a decision result to the terminal device by using the third indication information. The third indication information indicates whether to switch the state of the first execution unit. States of the first execution unit include the running state and the idle state, and a resource (for example, a computing power resource) occupied by the first execution unit in the running state is greater than a resource (for example, a computing power resource) occupied by the first execution unit in the idle state.

For example, when the network device determines, based on the third state information, that the first execution unit is not suitable for computing power collaboration, the network device indicates, by using the third indication information, the terminal device to switch the first execution unit from the running state to the idle state. In this case, the third indication information includes but is not limited to the identifier of the terminal device, the identifier of the first execution unit, and information for determining to switch to the idle state.

S25: The terminal device receives the third indication information sent by the network device.

If the third indication information indicates to switch the current state (that is, the running state) of the first execution unit to the idle state, the terminal device switches the first execution unit from the running state to the idle state, and stops delivering a processing task to the first execution unit. In this case, compared with the computing power resource N occupied by the first execution unit in the running state, the computing power resource M occupied by the first execution unit in the idle state is far less than the computing power resource N, and a free resource of N-M can be released. The free resource of N-M may be used for another service processing requirement.

Compared with directly deleting the first execution unit, in this embodiment, the terminal device switches the first execution unit to the idle state. Because the first execution unit in the idle state occupies only a small amount of a computing power resource, excessive computing resource occupation can be avoided, and problems of excessively long occupation time and affected real-time performance of service processing that are caused by subsequently recreating an execution unit can be avoided.

Optionally, after switching the first execution unit from the running state to the idle state, the terminal device may report, to the network device, information indicating that state switching succeeds. The information indicating that the state switching succeeds includes the identifier of the terminal device, the identifier of the first execution unit, and information about switching to the idle state. Correspondingly, after receiving the information indicating that the state switching succeeds, the network device updates current state information of the first execution unit.

In the foregoing steps S21 to S25, the implementation in which the terminal device requests the network device to switch the first execution unit from the running state to the idle state (the running state -> the idle state) is described by using the scenario in which the current state of the radio channel is poor in the terminal device. An implementation in which the terminal device requests the network device to switch the first execution unit from the idle state to the running state (the idle state -> the running state) is described below by using a scenario in which the current state of the radio channel becomes good in the terminal device. As shown 1202 in FIG. 12, the implementation includes steps S31 to S35.

S31 (not shown in FIG. 12): At a moment T1, the first execution unit of the terminal device is in the idle state; and the network device sends a reference signal to the terminal device. Correspondingly, the terminal device receives the reference signal sent by the network device.

S32: After receiving the reference signal, the terminal device measures the state of the radio channel (for example, a downlink channel state), and sends, to the network device by using third state information, a result (that is, a channel measurement result) of comparing a channel measurement result with a threshold.

If the channel measurement result indicates that a signal-to-noise ratio (Signal-to-Noise Ratio, SNR) of the channel at the moment T1 is greater than or equal to the threshold, it indicates that the current state of the channel meets a data transmission requirement for the terminal device to participate in collaborative computing. The terminal device may report the channel measurement result at the moment T1 to the network device and request the network device to switch the first execution unit from the idle state to the running state.

S33: When the channel measurement result indicates that the first execution unit is suitable for computing power collaboration, the terminal device sends the third state information and a switching request to the network device, to avoid a case in which, after quality of the channel is recovered, the network device does not deliver a task to the first execution unit because the network device cannot know the current state of the channel, causing the first execution unit to occupy a large amount of a computing power resource without processing any task. For related descriptions of the third state information and the switching request, refer to the descriptions in the foregoing steps S21 to S25. Details are not described herein again. The switching request herein includes the identifier of the terminal device, the identifier of the first execution unit, and information about switching a state to the running state. Optionally, the switching request may further include a switching reason.

S34: After receiving the third state information and the switching request, the network device makes a decision based on the third state information and the switching request and sends a decision result to the terminal device by using third indication information. The third indication information herein includes the identifier of the terminal device, the identifier of the first execution unit, and information about determining to switch to the running state.

S35: The terminal device receives the third indication information sent by the network device. If the third indication information indicates to switch the current state (that is, the idle state) of the first execution unit to the running state, the terminal device switches the first execution unit from the idle state to the running state, and delivers a processing task to the first execution unit. In this case, a computing power resource occupied by the first execution unit changes from M to N.

It can be learned that, when the terminal device measures that the current state of the channel meets a data transmission requirement, the first execution unit may be quickly switched from the idle state to the running state, and a new execution unit does not need to be recreated, to reduce a process of deleting or recreating the execution unit, so that real-time performance of service processing and user experience are improved.

In addition, when determining that the first execution unit is not suitable for or is suitable for computing power collaboration, the terminal device sends the switching request to the network device, so that the network device adjusts a task delivery strategy based on the switching request.

Optionally, after switching the first execution unit from the idle state to the running state, the terminal device may report, to the network device in time, information indicating that state switching succeeds, so that the network device delivers a matched processing task to the first execution unit. The information indicating that the state switching succeeds includes the identifier of the terminal device, the identifier of the first execution unit, and information about switching to the running state. Correspondingly, after receiving the information indicating that the state switching succeeds, the network device updates current state information of the first execution unit.

Optionally, when the terminal device fails to switch the state of the first execution unit based on the third indication information, the terminal device may alternatively report switching failure information to the network device in time, so that the network device learns of a state switching status of the first execution unit in time, to update the scheduling strategy in real time.

In an optional manner, the terminal device may switch the first execution unit from the running state to the idle state based on an actual situation (for example, the first execution unit temporarily has no processing task or the state of the radio channel is poor), and then report, to the network device, a state switching result indicating that the first execution unit has been switched from the running state to the idle state, so that the network device updates the state of the first execution unit in time and adjusts the scheduling strategy in time. Certainly, the terminal device may switch the first execution unit from the idle state to the running state based on an actual situation (for example, the state of the radio channel becomes good, a battery level of the terminal device is sufficient, or another reason), and then report, to the network device, a state switching result indicating that the first execution unit has been switched from the idle state to the running state, so that the network device updates the state of the first execution unit in time and delivers a processing task to the first execution unit.

It should be understood that the foregoing describes the implementation in which the first execution unit is switched between the idle state and the running state by using the current state of the radio channel as an example. Certainly, the foregoing implementation is also applicable to a case in which the terminal device requests the network device to indicate to switch the state of the first execution unit because the terminal device temporarily has no processing task. For example, currently, the terminal device temporarily has no processing task, and the terminal device requests the network device to switch the first execution unit from the running state to the idle state. The network device delivers the third indication information based on the switching request of the terminal device, to indicate to switch the first execution unit from the running state to the idle state. For another example, when the terminal device is currently processing a task, the terminal device may alternatively request the network device to switch the first execution unit from the running state to the idle state. The network device delivers the third indication information based on the switching request of the terminal device, to indicate the terminal device to switch the first execution unit from the running state to the idle state. In this case, the network device may migrate an uncompleted task of the first execution unit to another computing power node for continued execution, to ensure service continuity. Optionally, after a preset time period, if the terminal device is suitable for continuing to process the task, the terminal device may further request the network device again to switch the first execution unit from the idle state to the running state, to continue to execute the task.

Specifically, for an implementation of state switching of the first execution unit in another scenario, refer to steps S21 to S25 or steps S31 to S35. Details are not described herein again.

### Manner III

The first execution unit created by the terminal device supports being switched from the running state to the idle state.

In a possible implementation, with reference to the foregoing Manner II, when the terminal device switches the first execution unit from the running state to the idle state based on the third indication information sent by the network device, the network device may send fourth indication information to the terminal device. The fourth indication information indicates the terminal device to switch the state of the first execution unit from the idle state to the running state. Correspondingly, the first device determines the state of the first execution unit based on the fourth indication information, that is, switches the first execution unit from the idle state to the running state. Certainly, the network device may alternatively switch the first execution unit from the running state to the idle state again based on the fourth indication information.

It should be noted that the network device may switch the first execution unit of the terminal device from the running state to the idle state (the running state -> the idle state) or from the idle state to the running state (the idle state -> the running state) based on the fourth indication information. In different scenarios, manners in which the network device indicates the terminal device to switch the state of the first execution unit are different.

When the first execution unit is in the running state, the network device may indicate, based on one or more of the following reasons, the device to switch the first execution unit from the running state to the idle state: There is no task to be executed temporarily; another service processing has a resource requirement (for example, an execution unit with a higher priority has a computing power resource requirement, and needs the terminal device for collaborating); the current state of the radio channel is poor and the radio channel is not suitable for participating in collaborative computing (for example, the poor state of the radio channel affects data transmission, and further affects collaborative computing); and the terminal device is handed over from a base station A to a base station B in a moving process (that is, the terminal device is no longer suitable for performing collaborative computing with the base station A).

When the first execution unit is in the idle state, the network device may alternatively indicate the terminal device to switch the first execution unit from the idle state to the running state (that is, the idle state -> the running state).

It should be noted that the network device may indicate, based on one or more of the following reasons, the terminal device to switch the first execution unit from the idle state to the running state: An execution unit that processes another service releases a computing power resource; a priority of a task executed by the first execution unit becomes higher; the state of the radio channel becomes good; and the terminal device is handed over back from the base station B to the base station A in the moving process (that is, the terminal device is again suitable for performing collaborative computing with the base station A).

The following uses a mobility scenario as an example. The mobility scenario includes a base station A, a base station B, and a terminal device. A first execution unit of the terminal device is in a running state. In this case, the first execution unit performs collaborative computing with the base station A. In a collaborative computing process, the base station A delivers a reference signal to the terminal device. The terminal device measures a state of a radio channel between the terminal device and the base station A based on the reference signal, and reports a channel measurement result to the base station A. The base station A determines, based on the channel measurement result, whether to switch collaborative computing between the terminal device and the base station A to collaborative computing between the terminal device and the base station B. If the channel measurement result indicates that channel quality of the radio channel between the terminal device and the base station A is lower than a threshold, the base station A indicates the terminal device to be handed over to the base station B. Before the base station A indicates the terminal device to be handed over to the base station B, the base station A sends a collaboration switching request to the base station B. If the base station B determines, based on the collaboration switching request, to perform collaborative computing with the terminal device, the base station A indicates the terminal device to be handed over to the base station B, to perform collaborative computing with the base station B. In this case, the terminal device is handed over from the base station A to the base station B. The terminal device is no longer suitable for performing collaborative computing with the base station A. The base station A sends state switching indication information or deletion indication information to the terminal device, to indicate the terminal device to switch the first execution unit from the running state to an idle state, or delete the first execution unit. In this case, the base station A may migrate a related processing task matching the first execution unit to another computing power node that is collaborated with the base station A.

Certainly, if the terminal device is handed over from the base station B to the base station A again in a moving process, the base station B may also send a collaboration switching request to the base station A, and the base station A may continue to perform collaborative computing with the terminal device. The terminal device may recreate a new execution unit, or may switch the first execution unit from the idle state to the running state, to continue to execute a processing task delivered by the base station A.

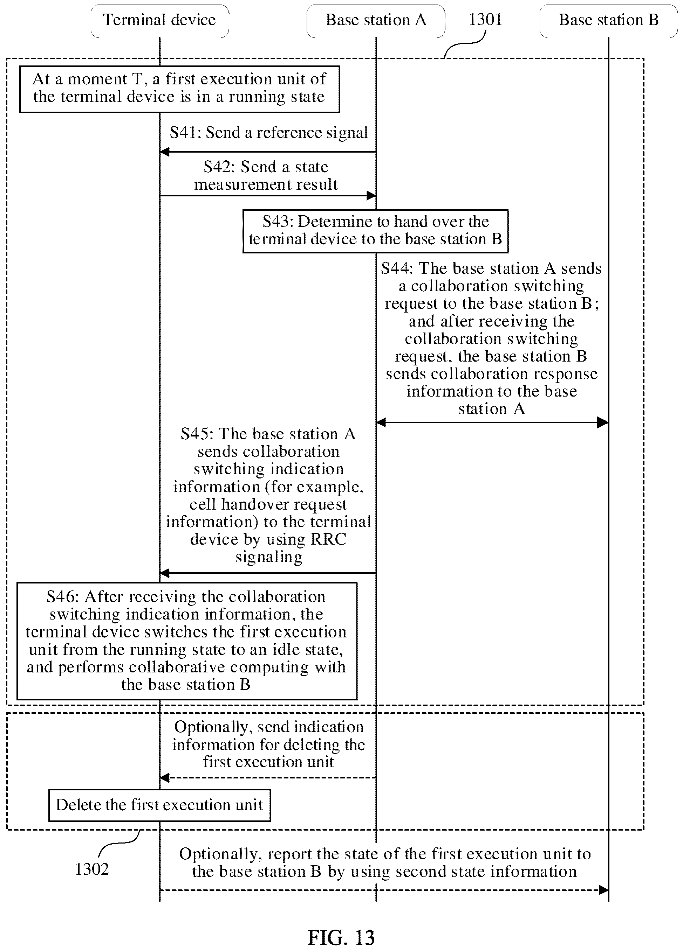

The foregoing mobility scenario is used as an example to describe an implementation in which the network device indicates, by using the fourth indication information, the terminal device to switch the state of the first execution unit from the idle state to the running state or from the running state to the idle state. As shown in 1301 in FIG. 13, the implementation includes steps S41 to S46.

S41: At a moment T, the first execution unit of the terminal device is in the running state (that is, the first execution unit is executing a task), and the base station A sends a reference signal to the terminal device. Correspondingly, the terminal device receives the reference signal sent by the base station A.

S42: The terminal device measures the state of the radio channel between the terminal device and the base station A based on the reference signal (for example, a CSI-RS), and reports a state measurement result to the base station A.

It should be noted that the state measurement result may indicate that the quality of the channel between the terminal device and the base station A meets a preset requirement, or may indicate that the quality of the channel between the terminal device and the base station A does not meet the preset requirement. The preset requirement means that the quality of the channel is greater than or equal to the threshold. The threshold may be preset in a protocol, or may be configured by a network.

S43: If the state measurement result sent by the terminal device to the base station A indicates that the quality of the channel between the terminal device and the base station A meets the requirement, the first execution unit continues to keep in the running state; or if the state measurement result sent by the terminal device to the base station A indicates that the quality of the channel between the terminal device and the base station A does not meet the requirement, the base station A determines to hand over the terminal device to the base station B.

S44: The base station A sends a collaboration switching request to the base station B; and after receiving the collaboration switching request, the base station B sends collaboration response information to the base station A. The collaboration response information may indicate that the base station B agrees to hand over the terminal device from the base station A to the base station B, or may indicate that the base station B does not agree to hand over the terminal device from the base station A to the base station B.

S45: After the base station A receives the collaboration response information sent by the base station B, if the collaboration response information indicates that the base station B agrees to hand over the terminal device from the base station A to the base station B, the base station A sends collaboration switching indication information (for example, cell handover request information) to the terminal device by using RRC signaling. The collaboration switching indication information includes information about the base station B, the identifier of the terminal device, the identifier of the first execution unit, and indication information for switching the first execution unit from the running state to the idle state. Certainly, if the collaboration response information indicates that the base station B does not agree to hand over the terminal device from the base station A to the base station B, the base station A may migrate a task allocated to the terminal device to another collaborative computing power node. Details are not described herein.

S46: After receiving the collaboration switching indication information, the terminal device switches the first execution unit from the running state to the idle state, and performs collaborative computing with the base station B. Optionally, the collaboration switching indication information may include the information about the base station B, the identifier of the terminal device, the identifier of the first execution unit, and indication information for deleting the first execution unit. In this case, after receiving the collaboration switching indication information, the terminal device deletes the first execution unit, as shown in 1302 in FIG. 13, and performs collaborative computing with the base station B.

Optionally, after the terminal device is handed over to the base station B, the terminal device may report the state of the first execution unit to the base station B by using the second state information. The second state information includes the identifier of the terminal device, the identifier of the first execution unit, and information indicating that the first execution unit is switched to the idle state (or information indicating that the first execution unit has been deleted). After the terminal device reports, by using the second state information, the information indicating that the first execution unit has been deleted, the base station B does not deliver a processing task to the first execution unit. The base station B may indicate, based on an actual collaboration requirement, the terminal device to create an execution unit for executing a task of a specific type, to participate in collaborative computing. After the terminal device reports, by using the second state information, the information indicating that the first execution unit is switched to the idle state, the base station B switches the first execution unit from the idle state to the running state in a proper scenario (for example, there is a collaboration requirement, a state of a radio channel between the terminal device and the base station B meets a preset requirement, or the base station B has an executable task), and delivers a proper processing task to the first execution unit.

In another optional implementation, when a communication parameter between the terminal device and the network device does not meet the preset requirement, the terminal device receives fifth indication information from the network device. The fifth indication information indicates to delete the first execution unit. Correspondingly, the terminal device deletes the first execution unit based on the fifth indication information.

It should be noted that the communication parameter includes but is not limited to the state of the radio channel, a usage status of a computing power resource, and priority information. The preset requirement includes a radio channel quality requirement, a computing power resource requirement, and a priority requirement.

For example, at the moment T, the network device delivers a reference signal to the terminal device, and the terminal device measures the state (that is, one of communication parameters) of the radio channel between the network device and the terminal device based on the reference signal. If a state measurement result indicates that the state of the radio channel between the terminal device and the network device does not meet the preset requirement, the network device may indicate, by using the fifth indication information, the terminal device to delete the first execution unit, to release a part of computing power resources for processing another service. For related descriptions of the preset requirement, refer to step S42. Details are not described herein again.

For another example, when an idle computing power resource (that is, the usage status of the computing power resource) of the terminal device does not meet a computing power resource (that is, the computing power resource requirement) required by the network device to create a new execution unit, when the network device indicates the terminal device to create a new execution unit to process a service with a higher priority, and if the terminal device cannot meet the computing power resource required by the network device to create the new execution unit, the network device sends the fifth indication information to the terminal device, so that the terminal device deletes the first execution unit based on the fifth indication information sent by the network device, to release all computing power resources occupied by the first execution unit. The network device may create the new execution unit based on all the computing power resources that are released by the first execution unit and the idle computing power resource, to process the service with the higher priority.

It can be learned that when there is no executable task, the state of the channel does not meet the requirement, or the like, the network device indicates to switch the first execution unit from the running state to the idle state, to reduce resource occupation and improve resource utilization. However, in a case in which a task arrives, the state of the channel meets the requirement, and an original base station is switched to in the moving process, an execution unit does not need to be recreated, and the first execution unit is quickly switched from the idle state to the running state again, so that a process of deleting or recreating the execution unit is reduced, and real-time performance of service processing and user experience are improved.

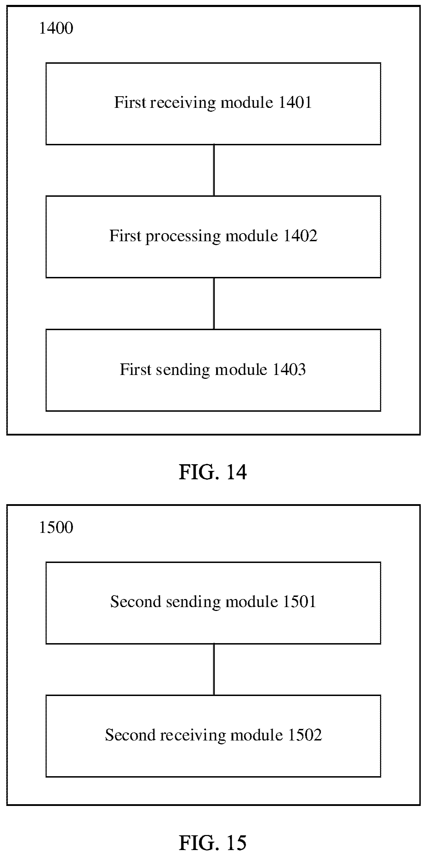

FIG. 14 shows a communication apparatus 1400 according to this application. The communication apparatus 1400 includes a first receiving module 1401, a first processing module 1402, and a first sending module 1403.

The first receiving module 1401 is configured to receive first indication information from a second device, where the first indication information indicates the first device to create at least one execution unit. The first processing module 1402 is configured to create a first execution unit based on the first indication information. The first sending module 1403 is configured to send first state information to the second device, where the first state information indicates a current state of the first execution unit.

For a specific manner in which the communication apparatus 1400 performs the state information sending method and generated beneficial effects, refer to related descriptions in the method embodiment shown in FIG. 4.

FIG. 15 shows a communication apparatus 1500 according to this application. The communication apparatus 1500 includes a second sending module 1501 and a second receiving module 1502.

The second sending module 1501 is configured to send first indication information to a first device, where the first indication information indicates the first device to create at least one execution unit. The second receiving module 1502 is configured to receive first state information from the first device, where the first state information indicates a current state of the first execution unit.

For a specific manner in which the communication apparatus 1500 performs the state information receiving method and generated beneficial effects, refer to related descriptions in the method embodiment shown in FIG. 4.

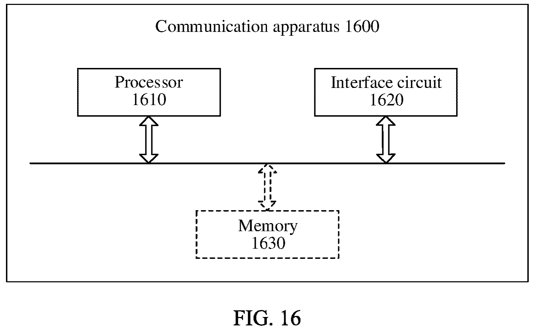

As shown in FIG. 16, a communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to store instructions executed by the processor 1610, store input data required by the processor 1610 to run the instructions, or store data generated after the processor 1610 runs the instructions.

When the communication apparatus 1600 is configured to implement the method in the foregoing method embodiment, the processor 1610 is configured to execute a computer program or instructions, so that the interface circuit 1620 is configured to perform functions of the foregoing first receiving module and the foregoing first sending module, functions of the foregoing second sending module and the foregoing second receiving module, functions of a third receiving module and a third sending module, or functions of a fourth sending module and a fourth receiving module.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing a software instruction by the processor. The software instruction may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer or a data storage device, for example, a server, integrating one or more usable media. The usable medium may be a magnetic medium, for example, a floppy disk, a hard disk drive, or a magnetic tape; may be an optical medium, for example, a DVD; or may be a semiconductor medium, for example, a solid-state drive (solid-state drive, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A state information sending method, wherein the method comprises:
receiving, by a first device, first indication information from a second device, wherein the first indication information indicates the first device to create at least one execution unit;
creating, by the first device, a first execution unit based on the first indication information;
and
sending, by the first device, first state information to the second device, wherein the first state information indicates a current state of the first execution unit.

2. The method according to claim 1, wherein before creating, by the first device, the first execution unit based on the first indication information, the method further comprises:
when a free resource of the first device does not meet a resource requirement of the first execution unit, switching, by the first device, a second execution unit from a running state to an idle state, wherein a resource occupied by the second execution unit in the idle state is less than a resource occupied by the second execution unit in the running state; and
creating, by the first device, the first execution unit based on the first indication information comprises:
creating, by the first device, the first execution unit based on the first indication information by using a released resource and the free resource, wherein the released resource comprises a resource released after the second execution unit is switched from the running state to the idle state.

3. The method according to claim 2, wherein a priority of the second execution unit is lower than a priority of the first execution unit.

4. The method according to any one of claims 1 to 3, wherein sending, by the first device, the first state information to the second device comprises:
sending, by the first device, the first state information to the second device based on first configuration information, wherein the first configuration information is used for configuring a reporting moment of the at least one execution unit.

5. The method according to any one of claims 1 to 3, wherein before sending, by the first device, the first state information to the second device, the method further comprises:
receiving, by the first device, query information from the second device, wherein the query information is used for querying the state of the first execution unit; and
sending, by the first device, the first state information to the second device comprises:
sending, by the first device, the first state information to the second device based on the query information.

6. The method according to any one of claims 1 to 5, wherein when the first state information indicates that the first execution unit is currently in a failed state, the method further comprises:
deleting or recreating, by the first device, the first execution unit.

7. The method according to claim 6, wherein before deleting or recreating, by the first device, the first execution unit, the method further comprises:
receiving, by the first device, second indication information from the second device, wherein the second indication information indicates the first device to delete or recreate the first execution unit; and
deleting or recreating, by the first device, the first execution unit comprises:
deleting or recreating, by the first device, the first execution unit based on the second indication information.

8. The method according to claim 6 or 7, wherein the method further comprises:
sending, by the first device, second state information to the second device, wherein the second state information indicates a task state of the first execution unit.

9. The method according to claim 8, wherein the method further comprises:
when the first execution unit is recreated, and the task state of the first execution unit indicates that a task is uncompleted, receiving, by the first device, second configuration information from the second device, wherein the second configuration information is used for configuring a task matching the first execution unit.

10. The method according to any one of claims 1 to 9, wherein when the first execution unit is not deleted, the method further comprises:
receiving, by the first device, third indication information from the second device, wherein the third indication information indicates whether to switch the state of the first execution unit, states of the first execution unit comprise the running state and the idle state, and a resource occupied by the first execution unit in the running state is greater than a resource occupied by the first execution unit in the idle state; and
determining, by the first device, the state of the first execution unit based on the third indication information.

11. The method according to claim 10, wherein before receiving, by the first device, the third indication information from the second device, the method further comprises:
sending, by the first device, a switching request to the second device, wherein the switching request is used for requesting to switch the state of the first execution unit.

12. The method according to claim 10 or 11, wherein before receiving, by the first device, the third indication information from the second device, the method further comprises:
sending, by the first device to the second device, third state information that indicates a state of a radio channel between the first device and the second device, wherein the third state information is used by the second device to send the third indication information, and the third state information and the first state information are sent by using same signaling.

13. The method according to any one of claims 10 to 12, wherein when the third indication information indicates to switch the state of the first execution unit from the running state to the idle state, the method further comprises:
receiving, by the first device, fourth indication information from the second device, wherein the fourth indication information indicates the first device to switch the state of the first execution unit from the idle state to the running state; and
determining, by the first device, the state of the first execution unit based on the fourth indication information.

14. The method according to any one of claims 10 to 12, wherein the method further comprises:
when a communication parameter between the first device and the second device does not meet a preset requirement, receiving, by the first device, fifth indication information from the second device, wherein the fifth indication information indicates to delete the first execution unit; and
deleting, by the first device, the first execution unit based on the fifth indication information.

15. A state information receiving method, wherein the method comprises:
sending, by a second device, first indication information to a first device, wherein the first indication information indicates the first device to create at least one execution unit; and
receiving, by the second device, first state information from the first device, wherein the first state information indicates a current state of the first execution unit.

16. The method according to claim 15, wherein receiving the first state information from the first device comprises:
receiving, by the second device, the first state information from the first device based on first configuration information, wherein the first configuration information is used for configuring a reporting moment of the at least one execution unit.

17. The method according to claim 15 or 16, wherein before receiving the first state information from the first device, the method further comprises:
sending, by the second device, query information to the first device, wherein the query information is used for querying the state of the first execution unit.

18. The method according to any one of claims 15 to 17, wherein when the first state information indicates that the first execution unit is currently in a failed state, the method further comprises:
sending, by the second device, second indication information to the first device, wherein the second indication information indicates the first device to delete or recreate the first execution unit.

19. The method according to claim 18, wherein the method further comprises:
receiving, by the second device, second state information from the first device, wherein the second state information indicates a task state of the first execution unit.

20. The method according to claim 19, wherein the method further comprises:
when the first execution unit is recreated, and the task state of the first execution unit indicates that a task is uncompleted, sending, by the second device, second configuration information to the second device, wherein the second configuration information is used for configuring a task matching the first execution unit.

21. The method according to any one of claims 15 to 20, wherein when the first execution unit is not deleted, the method further comprises:
sending, by the second device, third indication information to the first device, wherein the third indication information indicates whether to switch the state of the first execution unit, states of the first execution unit comprise a running state and an idle state, and a resource occupied by the first execution unit in the running state is greater than a resource occupied by the first execution unit in the idle state.

22. The method according to claim 21, wherein before sending, by the second device, the third indication information to the first device, the method further comprises:
receiving, by the second device, a switching request from the first device, wherein the switching request is used for requesting to switch the state of the first execution unit.

23. The method according to claim 21 or 22, wherein before sending, by the second device, the third indication information to the first device, the method further comprises:
receiving, by the second device, third state information that is from the first device and that indicates a state of a radio channel between the first device and the second device, wherein the third state information is used by the second device to send the third indication information.

24. The method according to any one of claims 21 to 23, wherein when the third indication information indicates to switch the state of the first execution unit from the running state to the idle state, the method further comprises:
sending, by the second device, fourth indication information to the first device, wherein the fourth indication information indicates the first device to switch the state of the first execution unit from the idle state to the running state.

25. The method according to any one of claims 21 to 23, wherein the method further comprises:
when a communication parameter between the first device and the second device does not meet a preset requirement, sending, by the second device, fifth indication information to the first device, wherein the fifth indication information indicates to delete the first execution unit.

26. A communication apparatus, wherein the communication apparatus comprises a module configured to perform the method according to any one of claims 1 to 14 or comprises a module configured to perform the method according to any one of claims 15 to 25.

27. A communication apparatus, wherein the communication apparatus comprises at least one processor; and
the processor is configured to execute a computer program or instructions, to implement the method according to any one of claims 1 to 14 or the method according to any one of claims 15 to 25.

28. A computer-readable storage medium, comprising instructions, wherein when the instructions are run on a communication apparatus, the method according to any one of claims 1 to 14 is enabled to be performed, or the method according to any one of claims 15 to 25 is enabled to be performed.

29. A communication system, wherein the communication system comprises:
an access network device configured to perform the method according to any one of claims 1 to 14 and a terminal configured to perform the method according to any one of claims 15 to 25.

30. A computer program product, wherein the computer program product comprises computer instructions; and when a part or all of the computer instructions are run on a computer, the method according to any one of claims 1 to 14 or the method according to any one of claims 15 to 25 is enabled to be performed.
